(19) Europäisches Patentamt
European Patent Office
Office européen des brevets

(11) EP 4 660 212 A1

(12) **EUROPEAN PATENT APPLICATION**
published in accordance with Art. 153(4) EPC

(43) Date of publication:
**10.12.2025 Bulletin 2025/50**

(21) Application number: **24750245.3**

(22) Date of filing: **30.01.2024**

(51) International Patent Classification (IPC):
***C08F 293/00*** *(2006.01)* ***C08F 8/12*** *(2006.01)*
***C08F 16/06*** *(2006.01)* ***C08L 29/04*** *(2006.01)*
***C08L 53/00*** *(2006.01)*

(52) Cooperative Patent Classification (CPC):
**C08F 8/12; C08F 16/06; C08F 293/00; C08L 29/04; C08L 53/00**

(86) International application number:
**PCT/JP2024/002749**

(87) International publication number:
**WO 2024/162296 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.02.2023 JP 2023014987**

(71) Applicant: **Japan Vam & Poval Co., Ltd.**
**Sakai-shi, Osaka 592-8331 (JP)**

(72) Inventors:
- **OMORI Takehiro**
  **Sakai-shi, Osaka 592-8331 (JP)**
- **AIBARA Seito**
  **Sakai-shi, Osaka 592-8331 (JP)**
- **KIMURA Yoshihiro**
  **Sakai-shi, Osaka 592-8331 (JP)**

(74) Representative: **Kraus & Lederer PartGmbB**
**Thomas-Wimmer-Ring 15**
**80539 München (DE)**

(54) **POLYVINYL ALCOHOL-BASED POLYMER**

(57) A polyvinyl alcohol-based polymer is provided. The polyvinyl alcohol-based polymer has a block character of 0.4 or less, etc.



Processed by Luminess, 75001 PARIS (FR)

## Description

TECHNICAL FIELD

The present invention relates to a polyvinyl alcohol-based polymer (a partially saponified polyvinyl alcohol-based polymer) and others.

BACKGROUND ART

Polyvinyl alcohol-based polymers (hereafter may be referred to as PVAs, PVA-based polymers, etc.) are polymers obtained by saponifying a polymer (a polyvinyl ester etc.) containing a vinyl ester as a polymerization component. PVAs have several characteristics including, for example, water solubility and film properties (such as strength, oil resistance, film-forming properties, or gas barrier properties). Due to these characteristics, PVAs are used for various applications, including emulsifiers, suspending agents, surfactants, textile finishing agents, various binders, paper processing agents, adhesives, films, etc.

PVAs with a specific degree of saponification or polymerization or other properties are used depending on the applications, the desired characteristics, etc.

In general, even when the monomer compositions of polymers are the same, the characteristics of the polymers may vary with their monomer sequences. For example, a block copolymer may be different from its random copolymer in its physical properties.

Such a monomer sequence (blocky nature) of a PVA is evaluated using the concept of block characters as well known in the art. For example, Patent Literature 1 discloses a modified vinyl alcohol-based polymer (A) comprising a sulfonic acid group or a salt thereof on its side chains, wherein a degree of modification with the sulfonic acid group or a salt thereof is from 0.01 mol% to 10 mol%, and wherein a block character of residual vinyl ester units is from 0.55 to 1.

CITATION LIST

PATENT LITERATURE

Patent Literature 1: WO 2019/159757

SUMMARY OF INVENTION

TECHNICAL PROBLEM

An object of the present invention is to provide a polyvinyl alcohol (PVA)-based polymer and others.

SOLUTION TO PROBLEM

PVAs, including partially saponified polyvinyl alcohols and partially saponified polyvinyl alcohol-based polymers, have vinyl alcohol units and vinyl ester units. Generally, vinyl alcohol units are hydrophilic, whereas vinyl ester units are hydrophobic. In this respect, PVAs can be understood as polymers having both hydrophilic units and hydrophobic units.

As described above, the blocky nature of a PVA is evaluated using the concept of block characters as well known in the art.

The block character is a measure indicating the distribution of vinyl ester units, i.e., residual vinyl ester units (residual vinyl ester-derived units without being saponified, $-CH_2-CH(OCOR)-$) in a PVA (a partially saponified polyvinyl alcohol or a partially saponified polyvinyl alcohol-based polymer). The block character takes the value of 0 to 2. A value closer to 0 indicates a more blocky nature, i.e., a more blocky distribution of vinyl ester groups. A value closer to 1 indicates a more random distribution of vinyl ester groups. A value closer to 2 indicates a more alternate-like distribution of vinyl ester groups.

According to the present inventors' investigations, such a blocky nature can be adjusted to some extent by adjusting the reaction conditions for saponification. For example, when saponification is carried out using a basic catalyst, such as sodium hydroxide, as a saponification catalyst, a more blocky distribution of residual vinyl ester groups can be easily achieved. On the other hand, when saponification is carried out using an acid catalyst, such as sulfuric acid, a more random distribution of residual vinyl ester groups can be easily achieved.

Based on this knowledge, the present inventors found that it is possible to produce a PVA with a more blocky nature, e.g., having a block character of 0.4 or less, 0.35 or less, or the like, or a PVA with a relatively large hydrodynamic radius in water. The inventors also found that it is possible to produce a PVA having a relatively large hydrodynamic radius

in water, which is probably due to its more blocky nature. The inventors further found that it is possible to produce a PVA having both a more blocky nature and a relatively large hydrodynamic radius in water. The inventors carried out further studies and completed the present invention.

Thus, the present invention relates to the following and others.

[1] A polyvinyl alcohol-based polymer (a partially saponified polyvinyl alcohol-based polymer) having a block character (a block character of vinyl ester units (residual vinyl ester units) or a block character of units derived from a vinyl ester) of 0.4 or less.
[2] A polyvinyl alcohol-based polymer having a hydrodynamic radius (a hydrodynamic radius of associates formed in water) of 8 nm or more in water at 25°C.
[3] A polyvinyl alcohol-based polymer having a block character of 0.4 or less and a hydrodynamic radius of 8 nm or more in water at 25°C.
[4] The polyvinyl alcohol-based polymer according to any one of the above [1] to [3], wherein the block character is 0.37 or less (e.g., 0.35 or less).
[5] The polyvinyl alcohol-based polymer according to any one of the above [1] to [4], wherein the polyvinyl alcohol-based polymer comprises vinyl ester units (residual vinyl ester units) comprising two or more types of vinyl ester units.
[6] The polyvinyl alcohol-based polymer according to any one of the above [1] to [5], wherein the vinyl ester units (residual vinyl ester units) comprise a vinyl acetate unit and a vinyl ester unit other than the vinyl acetate unit.
[7] The polyvinyl alcohol-based polymer according to any one of the above [1] to [6], wherein the vinyl ester units (residual vinyl ester units) comprise a vinyl acetate unit and a vinyl ester unit not containing chlorine.
[8] The polyvinyl alcohol-based polymer according to any one of the above [1] to [7], wherein the vinyl ester units (residual vinyl ester units) comprise a vinyl acetate unit and a vinyl pivalate unit.
[9] The polyvinyl alcohol-based polymer according to any one of the above [1] to [8], wherein a 1% by mass solution of the polyvinyl alcohol-based polymer in DMSO (dimethylsulfoxide) has a YI of 40 or less.
[10] The polyvinyl alcohol-based polymer according to any one of the above [1] to [9], wherein when the polyvinyl alcohol-based polymer is completely saponified, the polyvinyl alcohol-based polymer has a molecular weight distribution (Mw/Mn) of 2.2 or less.
[11] The polyvinyl alcohol-based polymer according to any one of the above [1] to [10], wherein the polyvinyl alcohol-based polymer has a chlorine (chlorine atom) content of 1000 ppm or less.
[12] The polyvinyl alcohol-based polymer according to any one of the above [1] to [11], wherein the polyvinyl alcohol-based polymer has a degree of saponification of 40 to 96 mol%.
[13] The polyvinyl alcohol-based polymer according to any one of the above [1] to [12], wherein the polyvinyl alcohol-based polymer is a product of saponification of a block copolymer (e.g., a diblock copolymer or a triblock copolymer) containing two or more types of vinyl esters as polymerization components.
[14] The polyvinyl alcohol-based polymer according to any one of the above [1] to [13], wherein the polyvinyl alcohol-based polymer has a degree of polymerization of 50 or more.
[15] The polyvinyl alcohol-based polymer according to any one of the above [1] to [14], wherein the polyvinyl alcohol-based polymer has a degree of polymerization of 50 to 1000 and a degree of saponification of 40 to 96 mol%.
[16] A polyvinyl alcohol-based polymer having

a block character of 0.37 or less (e.g., 0.35 or less),
a hydrodynamic radius of 10 nm or more in water at 25°C,
a degree of polymerization of 50 to 1000, and
a degree of saponification of 40 to 96 mol%, and

satisfying at least one selected from the following (1), (2) and (3):

(1) the polyvinyl alcohol-based polymer, when completely saponified, has a molecular weight distribution (Mw/Mn) of 2 or less,
(2) a 1% by mass solution of the polyvinyl alcohol-based polymer in DMSO has a YI of 30 or less, and
(3) the polyvinyl alcohol-based polymer has a chlorine (chlorine atom) content of 100 ppm or less.

[17] An aqueous liquid comprising the polyvinyl alcohol-based polymer according to any one of the above [1] to [16], for example, an aqueous liquid comprising an associate (micelle) of the polyvinyl alcohol-based polymer according to any one of the above [1] to [16], or an aqueous liquid comprising the polyvinyl alcohol-based polymer according to any one of the above [1] to [16] formed into an associate (micelle).
[18] The aqueous liquid according to the above [17], wherein the polyvinyl alcohol-based polymer has a hydrodynamic radius of 10 nm or more, or wherein the polyvinyl alcohol-based polymer is formed into an associate (micelle).

[19] A method for producing a polyvinyl alcohol-based polymer, e.g., the polyvinyl alcohol-based polymer according to any one of the above [1] to [16], comprising at least the following steps 1, 2 and 3:

step 1) subjecting a first vinyl ester to living radical polymerization to synthesize a macro-chain transfer agent,
step 2) subjecting a second vinyl ester different from the first vinyl ester to living radical polymerization in the presence of the macro-chain transfer agent obtained in step 1 to synthesize a block copolymer, and
step 3) partially saponifying the block copolymer obtained by at least step 2.

[20] The method according to the above [19], wherein the living radical polymerization is reversible addition-fragmentation chain-transfer polymerization (RAFT polymerization).
[21] A medical material (or a medicinal material, for example, a drug delivery system etc.) comprising the polyvinyl alcohol-based polymer according to any one of the above [1] to [16].
[22] Use of the polyvinyl alcohol-based polymer according to any one of the above [1] to [16] for a medical material (or a medicinal material, for example, a drug delivery system etc.).
[23] A micelle (associate) of the polyvinyl alcohol-based polymer according to any one of the above [1] to [16].
[24] A micelle (an associate or a formulation) comprising the polyvinyl alcohol-based polymer according to any one of the above [1] to [16] and a cargo [a cargo encapsulated into the polyvinyl alcohol-based polymer; for example, a drug, or a hydrophobic substance (a substance having a solubility of 500 mg or less in 100 mL (100 g) of water at 20°C or having a solubility of 500 mg/100 g $H_2O$ at 20°C)].
[25] The micelle according to the above [24], wherein the cargo contains a hydrophobic substance (a substance having a solubility of 500 mg or less in 100 mL of water at 20°C).
[26] An aqueous liquid comprising the micelle (the associate or the formulation) according to the above [24] or [25].

## ADVANTAGEOUS EFFECTS OF INVENTION

The present invention provides a PVA, a novel or specific PVA, a partially saponified polyvinyl alcohol, or a partially saponified polyvinyl alcohol-based polymer.
In one embodiment, the PVA of the present invention has a specific small block character, such as 0.4 or less, 0.35 or less, etc.
Such a PVA has a more blocky nature such that it can be referred to as a block copolymer (or a highly blocky copolymer), and is expected to have physical properties or other characteristics that are greatly different from those of conventional PVAs, e.g., PVAs with a large block character.
For example, such a PVA with a more blocky nature can efficiently function as an (excellent) amphiphilic polymer, and such amphiphilic polymer can efficiently be used for various applications, for example, as a medical material for a drug delivery system etc. In particular, such a function can be suitably achieved while maintaining the physical properties and/or functions of a PVA.
In one embodiment, the PVA of the present invention has a relatively large hydrodynamic radius in water.
Such a PVA may efficiently form associates (or large associates) in water, and such a function is efficiently used for various applications, for example, as a medical material for a drug delivery system etc. Such a function can also be suitably achieved while maintaining the physical properties and/or functions of a PVA.
In one embodiment, the PVA of the present invention has a specific small block character, such as 0.4 or less, 0.35 or less, etc. and a relatively large hydrodynamic radius in water as described above, and can also have a specific hue (color development characteristics). Due to these physical properties, the PVA of the present invention exhibits the functions and characteristics described above (such as a function as an amphiphilic polymer and the capability of efficiently forming associates), and at the same time, achieves the inhibition of color development.
In an embodiment, the present invention provides a method for producing the PVA. The production method of the present invention easily or efficiently produces the PVA described above.

## DESCRIPTION OF EMBODIMENTS

Embodiments of the present invention will be described in detail below. The present invention is not limited to the embodiments described below.

### PVA

The present invention provides a specific polyvinyl alcohol-based polymer (hereinafter may also be referred to as a PVA-based polymer, a PVA, or the like). The PVA may typically be a partially saponified product of a polymer containing a vinyl ester as a polymerization component.

The block character of the PVA may be small, or the block character of vinyl ester units (residual vinyl ester units) may be small. In other words, the PVA may have a more blocky nature. The block character of the PVA may be, for example, 0.42 or less, e.g., 0.4 or less, or 0.38 or less, may preferably be 0.37 or less, e.g., 0.36 or less, more preferably 0.35 or less, e.g., 0.34 or less, 0.33 or less, 0.32 or less, or 0.31 or less, in particular, may be 0.3 or less, e.g., 0.29 or less, 0.28 or less, 0.27 or less, 0.26 or less, or 0.25 or less, or may be 0.24 or less, e.g., 0.23 or less, 0.22 or less, 0.21 or less, 0.2 or less, 0.19 or less, 0.18 or less, 0.17 or less, 0.16 or less, 0.15 or less, etc.

The lower limit of the block character of the PVA may be, for example, but is not limited to, 0 or more, 0.01 or more, 0.03 or more, 0.05 or more, 0.07 or more, 0.08 or more, 0.09 or more, 0.1 or more, etc.

The range of the block character may be selected from appropriate combinations of these ranges (the upper and lower limits), and may be, for example, 0.01 to 0.33, 0.03 to 0.3, etc. Hereinafter, the same applies to the definition of ranges.

Specifically, the block character of the PVA may be, for example, 0.01 to 0.35, 0.05 to 0.30, 0.07 to 0.25, etc.

The block character ($\eta$) is a measure indicating the distribution of vinyl ester units in a PVA (a partially saponified PVA), i.e., residual vinyl ester-derived units or vinyl ester groups without being saponified in a PVA (a partially saponified PVA) as described above. The block character can be determined by, for example, analyzing three types of peaks observed in the methylene region of $^{13}$C-NMR spectra. These three peaks correspond to three types of dyad sequence structures corresponding to (OH, OH), (OH, OCOR), and (OCOR, OCOR), respectively. Their absorption intensities are proportional to the abundance of the three dyads (OCOR means or corresponds to a vinyl ester unit or a residual vinyl ester group; for example, when the vinyl ester is vinyl acetate, R = $CH_3$). The block character ($\eta$) is expressed by the equation (1) shown below.

$$\eta = (\mathrm{OH, OCOR})/[2(\mathrm{OH})(\mathrm{OCOR})] \qquad \text{equation (1),}$$

wherein (OH, OCOR) represents the fraction of a dyad sequence structure in which an OH group is adjacent to an OCOR group (OH, OCOR), (OH) represents the fraction of vinyl alcohol, and (OCOR) represents the fraction of residual vinyl ester groups. Each fraction is expressed as a mole fraction.

The block character takes the value of 0 to 2. A value closer to 0 indicates a more blocky distribution of vinyl ester groups. A value closer to 1 indicates a more random distribution of vinyl ester groups. A value closer to 2 indicates a more alternate-like distribution of vinyl ester groups. The measurement method or other details of the block character are described in detail in Macromolecules, 10, 532 (1977).

The PVA with such a small block character as described above can efficiently be obtained by, for example, selecting the type of vinyl ester, selecting the polymerization method, or selecting the saponification conditions, etc. in the production of a polymer containing a vinyl ester as a polymerization component as described later.

Such a PVA with a small block character as described above can also be referred to as a block copolymer.

The PVA is typically a partially saponified product of a polymer containing a vinyl ester as a polymerization component as described above. In the production of such a PVA, a so-called PVA block copolymer, i.e., a PVA with a more blocky nature can be easily and efficiently obtained by producing a block copolymer from a polymer containing a vinyl ester as a polymerization component as described later.

The configuration of such a block copolymer (the configuration of blocks) is not particularly limited, and may be selected as appropriate depending on the desired performance etc. The block copolymer may be a diblock copolymer or a block copolymer composed of three or more blocks (e.g., a triblock polymer, a tetrablock polymer, etc.). For easy and efficient production and other reasons, the block copolymer may be a diblock copolymer, a triblock copolymer, or the like.

The PVA may be capable of dissolving or dispersing in water or a medium containing water (or an aqueous medium), or the PVA may form or be capable of forming associates (micelles) in water or a medium containing water.

The hydrodynamic radius of the PVA in water, e.g., at 25°C, for example, the hydrodynamic radius of the PVA at 1 g/L in water at 25°C, or the hydrodynamic radius of associates formed in water may be relatively large, and may be, for example, 7 nm or more, e.g., 7.5 nm or more, preferably 8 nm or more, e.g., 9 nm or more, more preferably 10 nm or more, e.g., 11 nm or more, or may be 12 nm or more, e.g., 13 nm or more, 14 nm or more, 15 nm or more, 16 nm or more, 17 nm or more, 18 nm or more, 19 nm or more, 20 nm or more, 21 nm or more, 22 nm or more, 23 nm or more, 24 nm or more, 25 nm or more, 26 nm or more, 27 nm or more, 28 nm or more, 29 nm or more, 30 nm or more, 31 nm or more, 32 nm or more, 33 nm or more, 35 nm or more, 38 nm or more, 40 nm or more, 45 nm or more, 48 nm or more, 50 nm or more, etc.

The upper limit of the hydrodynamic radius of the PVA in water, e.g., at 25°C, for example, the hydrodynamic radius of the PVA at 1 g/L in water at 25°C, or the hydrodynamic radius of associates formed in water may be, for example, but is limited to, 200 nm or less, 180 nm or less, 150 nm or less, 120 nm or less, 100 nm or less, 80 nm or less, 70 nm or less, 60 nm or less, etc.

Specifically, the hydrodynamic radius of the PVA in water, e.g., at 25°C, for example, the hydrodynamic radius of the PVA at 1 g/L in water at 25°C, or the hydrodynamic radius of associates formed in water may be, for example, 10 to 200

nm etc.

The hydrodynamic radius can be determined by, for example, Dynamic Light Scattering (DLS) using a DLS analyzer.

The hydrodynamic radius can serve as a measure for the easiness of the formation of associates or the extent of the formation of associates (or a capability of forming associates). The associates are, for example, composed of a shell of vinyl alcohol unit-containing (-rich) segments (hydrophilic segments) and a core of vinyl ester unit-containing (-rich) segments (hydrophobic segments). The hydrodynamic radius may be attributed to the degree of the blocky nature described above.

The PVA with the hydrodynamic radius as described above can be efficiently obtained by, for example, selecting the type of vinyl ester, selecting the degree of saponification (further selecting the degree of polymerization), selecting the polymerization method, selecting the saponification conditions, etc. in the production of a polymer containing a vinyl ester as a polymerization component as described later.

The YI (yellowness, or yellow index) of a 1% by mass solution of the PVA in dimethylsulfoxide (DMSO) may be selected from, for example, the range of about 80 or less, for example, 70 or less. The YI of a 1% by mass solution of the PVA in DMSO is preferably 65 or less, e.g., less than 65, or 60 or less, and more preferably 55 or less, e.g., 50 or less, 45 or less, 35 or less, 30 or less, 28 or less, 25 or less, 22 or less, 20 or less, 18 or less, 15 or less, 12 or less, 10 or less, 8 or less, etc.

The YI of a 1% by mass solution of the PVA in DMSO can be calculated from data obtained by, for example, measuring the UV-Vis spectrum of a 1% by mass solution of the PVA in DMSO at 20°C (in, e.g., a quartz cell with a 10 mm optical path length) using an ultraviolet-visible spectrometer.

A YI reflects color development. The PVA with such a YI as above is excellent in hue (color development is inhibited). The YI is easily and efficiently adjusted to fall within the range described above by selecting a raw material for the PVA (for example, avoiding use of a chlorine-containing vinyl ester as the vinyl ester, or using only a minimal amount of a chlorine-containing vinyl ester), by reducing the amount of an unreacted vinyl ester remaining after the polymerization step (removing an unreacted vinyl ester), by neutralizing a residual alkaline catalyst after the saponification step, by setting a not too high drying temperature after the neutralization, etc., as described later.

The PVA has vinyl alcohol units [saponified (hydrolyzed) vinyl ester-derived units ($-CH_2-CH(OH)-$)] and vinyl ester units [vinyl ester-derived units ($-CH_2-CH(OCOR)-$)]. The PVA may typically be a saponified product of a polymer of a polymerization component containing a vinyl ester.

The degree of saponification of the PVA (which corresponds to the equation: [$x/(x + y + z) \times 100\%$ (mol%)] described later) may be selected from, for example, the range of about 99 mol% or less or about 99% or less. To easily achieve the desired functions (for example, the solubility in water, the easiness of the formation of associates, etc.), the block character, the hydrodynamic radius as described above, etc. (or to easily and efficiently achieve all of these), the degree of saponification of the PVA may be about 98% or less, e.g., 97 mol% or less, preferably about 96 mol% or less, e.g., 95 mol% or less, more preferably about 94 mol% or less, e.g., 93.5 mol% or less, or may be 93 mol% or less, e.g., 92 mol% or less, 91 mol% or less, 90 mol% or less, less than 90 mol%, 89.5 mol% or less, 89 mol%, 88 mol% or less, 87 mol% or less, 86 mol% or less, 85 mol% or less, 84 mol% or less, 83 mol% or less, 82 mol% or less, 81 mol% or less, 80 mol% or less, less than 80 mol%, 79 mol% or less, 78 mol% or less, 77 mol% or less, 76 mol% or less, 75 mol% or less, 74 mol% or less, 73 mol% or less, 72 mol% or less, 71 mol% or less, 70 mol% or less, less than 70 mol%, 69 mol% or less, 68 mol% or less, 67 mol% or less, 66 mol% or less, 65 mol% or less, 64 mol% or less, 63 mol% or less, 62 mol% or less, 61 mol% or less, 60 mol% or less, less than 60 mol%, 59 mol% or less, 58 mol% or less, 57 mol% or less, 56 mol% or less, 55 mol% or less, 54 mol% or less, 53 mol% or less, 52 mol% or less, 51 mol% or less, 50 mol% or less, less than 50 mol%, etc.

The degree of saponification of the PVA (or [$x/(x + y + z) \times 100\%$ (mol%)] described later) can be selected depending on the desired characteristics (e.g., the solubility in water, the easiness of the formation of associates, etc.) etc., and may be selected from, for example, the range of about 10 mol% or more or about 10% or more. The degree of saponification of the PVA may be about 12 mol% or more, e.g., 15 mol% or more, preferably about 20 mol% or more, e.g., 25 mol% or more, and more preferably about 30 mol% or more, e.g., 35 mol% or more, or 38 mol% or more, and may be 40 mol% or more, e.g., more than 40 mol%, 41 mol% or more, 42 mol% or more, 43 mol% or more, 44 mol% or more, 45 mol% or more, 46 mol% or more, 47 mol% or more, 48 mol% or more, 49 mol% or more, 50 mol% or more, more than 50 mol%, 51 mol% or more, 52 mol% or more, 53 mol% or more, 54 mol% or more, 55 mol% or more, 56 mol% or more, 57 mol% or more, 58 mol% or more, 59 mol% or more, 60 mol% or more, more than 60 mol%, 61 mol% or more, 62 mol% or more, 63 mol% or more, 64 mol% or more, 65 mol% or more, 66 mol% or more, 67 mol% or more, 68 mol% or more, 69 mol% or more, 70 mol% or more, more than 70 mol%, 71 mol% or more, 72 mol% or more, 73 mol% or more, 74 mol% or more, 75 mol% or more, 76 mol% or more, 77 mol% or more, 78 mol% or more, 79 mol% or more, 80 mol% or more, more than 80 mol%, 81 mol% or more, 82 mol% or more, 83 mol% or more, 84 mol% or more, 85 mol% or more, 86 mol% or more, 87 mol% or more, 88 mol% or more, 89 mol% or more, 90 mol% or more, more than 90 mol%, 91 mol% or more, etc.

Specifically, the degree of saponification of the PVA (or [$x/(x + y + z) \times 100\%$ (mol%)] described later) may be, for example, 40 to 96 mol%, 50 to 94 mol%, 60 to 92 mol%, etc.

The degree of saponification of the PVA (or [x/(x + y + z) × 100% (mol%)] described later) can be determined by, for example, NMR (combination of the degree of polymerization and composition analysis by NMR), the measurement method for the degree of saponification of PVAs as stipulated in JIS K 6726, a calculation based on other analysis methods, etc.

The degree of polymerization (average degree of polymerization) of the PVA [the total number or amount of monomer-derived units, or the total number or amount of vinyl alcohol units and vinyl ester units (x + y + z, described later)] may be selected from the range of about 20 or more, for example, 30 or more. To easily achieve the desired functions (good amphiphilicity etc.), the block character, the hydrodynamic radius as described above, etc. (or to easily and efficiently achieve all of these), the degree of polymerization (average degree of polymerization) of the PVA may be, for example, about 35 or more, preferably about 40 or more, more preferably about 50 or more, e.g., 55 or more, or may be 60 or more, e.g., 65 or more, 70 or more, 75 or more, 80 or more, 85 or more, 90 or more, 95 or more, 100 or more, 105 or more, 110 or more, 120 or more, 130 or more, 140 or more, 150 or more, etc.

The upper limit of the degree of polymerization (average degree of polymerization) of the PVA [the total number or amount of monomer-derived units, or the total number or amount of vinyl alcohol units and vinyl ester units (x + y + z, described later)] may be, for example, but is not limited to, 10000, 8000, 7000, 6000, 5000, 4000, 3000, 2000, 1500, 1200, 1000, 900, 800, 700, 600, 500, 450, 400, 350, 300, less than 300, 290, 280, 270, 260, 250, 240, 230, 220, 210, 200, etc.

When the degree of polymerization is not excessively high (for example, 1000 or less etc.), the polymerization is easy to control.

Specifically, the degree of polymerization (average degree of polymerization) of the PVA [the total number or amount of monomer-derived units, or the total number or amount of vinyl alcohol units and vinyl ester units (x + y + z, described later)] may be, for example, 40 to 1000, 50 to 1000, 60 to 700, 70 to 500, etc.

The total number or amount of the vinyl alcohol units (x, described later) in the PVA may be selected from the range of about 10 or more, for example, 15 or more. To easily achieve the desired functions (good amphiphilicity etc.), the block character, the hydrodynamic radius as described above, etc. (or to easily and efficiently achieve all of these), the total number or amount of the vinyl alcohol units (x, described later) in the PVA may be, for example, about 20 or more, preferably about 30 or more, more preferably about 40 or more, e.g., 45 or more, and may be 50 or more, e.g., 55 or more, 60 or more, 65 or more, 70 or more, 80 or more, 85 or more, 90 or more, 95 or more, 100 or more, 120 or more, 150 or more, etc.

The upper limit of the total number or amount of the vinyl alcohol units (x, described later) in the PVA may be, for example, but is not limited to, 5000, 4000, 3000, 2000, 1500, 1200, 1000, 900, 800, 700, 600, 500, 450, 400, 350, 300, less than 300, 290, 280, 270, 260, 250, 240, 230, 220, 210, 200, 180, 150, 120, 100, etc.

When the total number or amount of the vinyl alcohol units (x, described later) is not excessively high (for example, 1000 or less etc.), the polymerization is easy to control.

Specifically, the total number or amount of the vinyl alcohol units (x, described later) in the PVA may be, for example, 30 to 1000, 40 to 1000, 40 to 700, 50 to 400, etc.

The total number or amount of the vinyl ester units (y + z, described later) in the PVA may be selected from the range of about 2 or more, for example, 3 or more. To easily achieve the desired functions (good amphiphilicity etc.), the block character, the hydrodynamic radius as described above, etc. (or to easily and efficiently achieve all of these), the total number or amount of the vinyl ester units (y + z, described later) in the PVA may be, for example, about 3.5 or more, preferably about 4 or more, more preferably about 4.5 or more, e.g., 5 or more, and may be 6 or more, e.g., 6.5 or more, 7 or more, 7.5 or more, 8 or more, 8.5 or more, 9 or more, 9.5 or more, 10 or more, 10.5 or more, 11 or more, etc.

The upper limit of the total number or amount of the vinyl ester units (y + z, described later) in the PVA may be, for example, but is not limited to, 3000, 2000, 1500, 1200, 1000, 900, 800, 700, 600, 500, 450, 400, 350, 300, less than 300, 290, 280, 270, 260, 250, 240, 230, 220, 210, 200, 180, 150, 120, 100, 80, 70, 60, 50, 40, 30, 20, 18, 15, 12, etc.

When the total number or amount of the vinyl ester units (y + z, described later) is not excessively high (for example, 500 or less etc.), the polymerization is easy to control.

Specifically, the total number or amount of the vinyl ester units (y + z, described later) in the PVA may be, for example, 4 to 500, 6 to 300, 8 to 200, etc.

The degree of polymerization, the total number or amount of the vinyl alcohol units or the vinyl ester units, etc. can be determined by, for example, NMR, GPC [for example, a calculation based on a completely saponified product, or a calculation based on a re-esterified product (e.g., an acetylated product)], the method as stipulated in JIS K 6726, a calculation based on other analysis methods, a combination thereof, etc.

The molecular weight distribution [mass (weight) average molecular weight (Mw)/number average molecular weight (Mn)] of the PVA when completely saponified (100% saponification) may be about 5 or less, e.g., 4 or less, or 3.5 or less, may be, for example, 3 or less, e.g., 2.8 or less, preferably 2.5 or less, e.g., 2.4 or less, less than 2.4, or 2.3 or less, and more preferably 2.2 or less, e.g., 2.1 or less, 2 or less, 1.9 or less, 1.8 or less, 1.7 or less, 1.6 or less, 1.5 or less, etc., or may be 1 or more, e.g., 1.01 or more, 1.02 or more, 1.05 or more, 1.07 or more, 1.1 or more, 1.15 or more, 1.2 or more, 1.3 or more, etc.

Specifically, the molecular weight distribution may be, for example, 1 to 2.2, 1.05 to 2, 1.2 to 2, 1.07 to 1.9, 1.1 to 1.8, etc.

The molecular weight distribution is believed to be related to the presence of chain transfer (or the amount of chain transfer) or the formation of branching structure (or the amount of branching structure). Therefore, depending on the desired physical properties of the PVA, including, for example, good amphiphilicity, the easiness of association, etc., the PVA preferably has a narrow (small) molecular weight distribution.

The number average molecular weight (Mn) of the PVA when completely saponified (100% saponification) may be, for example, 300 or more, e.g., 500 or more, or 800 or more, and may preferably be 1000 or more, e.g., 1500 or more, and more preferably 2000 or more, e.g., 2500 or more, 3000 or more, 3500 or more, 4000 or more, 4500 or more, 5000 or more, 5500 or more, 6000 or more, 6500 or more, 7000 or more, 8000 or more, 9000 or more, etc.

The number average molecular weight (Mn) of the PVA when completely saponified (100% saponification) may be, for example, about 1000000 or less, e.g., 500000 or less, preferably about 300000 or less, e.g., 200000 or less, and more preferably about 100000 or less, e.g., 80000 or less, or may be 50000 or less, e.g., 40000 or less, 30000 or less, 20000 or less, 15000 or less, 12000 or less, etc.

The Mn, Mw, and Mw/Mn can be determined by, for example, GPC, for example, GPC using polyethylene glycol as an analytical standard.

The chlorine content of the PVA (the amount of chlorine atoms in the PVA) may be selected from the range of about 10000 ppm (mass ppm) or less, for example, 9000 ppm or less, 8000 ppm or less, 7000 ppm or less, or 6000 ppm or less. The chlorine content of the PVA may be, for example, 5000 ppm or less, e.g., 4000 ppm or less, preferably 3000 ppm or less, e.g., 2000 ppm or less, more preferably 1000 ppm or less, e.g., 800 ppm or less, and in particular, may be 500 ppm or less, e.g., 300 ppm or less, 200 ppm or less, 100 ppm or less, 80 ppm or less, 60 ppm or less, 50 ppm or less, 40 ppm or less, or 30 ppm or less.

The chlorine may be contained in the PVA as, for example, a substituent (e.g., as a chlorine atom in vinyl monochloroacetate units), or as an impurity (e.g., chloride ions in sodium chloride, etc.).

Depending on the source of the chlorine, when the chlorine is derived from, for example, a vinyl ester, the chlorine is believed to be related to the amount of (residual) vinyl ester units, the presence of chain transfer (or the amount of chain transfer), or the formation of branching structure (or the amount of branching structure). Therefore, depending on the desired physical properties of the PVA, including, for example, good amphiphilicity, and the easiness of association, the PVA preferably has a small chlorine content.

Chlorine may also serve as a cause of color development of PVAs, and thus when the chlorine content in the PVA is small, color development may be efficiently inhibited.

The chlorine content in the PVA may be determined by burning the PVA, for example. Specifically, the chlorine content in the PVA may be determined by the method described later, or the like.

The PVA has vinyl alcohol units and vinyl ester units as described above.

Examples of the vinyl ester in the vinyl ester units include a vinyl ester not containing a chlorine atom (in particular, not containing a halogen atom other than a fluorine atom), for example, a vinyl ester of a fatty acid that may have a fluorine atom, such as vinyl formate, vinyl acetate, vinyl propionate, vinyl caprylate, vinyl pivalate, vinyl versatate, or vinyl trifluoroacetate, or an aromatic vinyl ester that may have a fluorine atom, such as vinyl benzoate; a vinyl ester having a halogen atom other than a fluorine atom (e.g., a chlorine atom), for example, the above vinyl ester of a fatty acid substituted with one or more halogen atoms other than a fluorine atom (e.g., a chlorine atom), such as vinyl monochloroacetate.

The vinyl ester units may contain a single type or two or more types of vinyl ester units.

In particular, when a polymer before saponification contains two or more types of vinyl ester units as described later, the resulting PVA often has two or more types of vinyl ester units corresponding to the two or more types of vinyl ester units (i.e., two or more types of vinyl ester units that remain without being saponified), although it depends on the saponification conditions etc.

Preferably, the vinyl ester units often contain at least a vinyl acetate unit (a vinyl acetate-derived unit) for industrial applicability etc. The vinyl ester units may typically contain a vinyl acetate unit and a vinyl ester unit other than vinyl acetate units.

The vinyl ester units preferably do not contain a vinyl ester unit having a halogen atom other than a fluorine atom (e.g., a chlorine atom) (e.g., do not contain a vinyl monochloroacetate unit), or even when the vinyl ester units contain a vinyl ester unit having a halogen atom other than a fluorine atom, the amount of such a vinyl ester unit is preferably in a small amount relative to the total amount of the vinyl ester units, for example, in an amount of 30 mol% or less, 20 mol% or less, 15 mol% or less, 10 mol% or less, 5 mol% or less, or 1 mol% or less.

The vinyl ester unit other than vinyl acetate units may be any units other than vinyl acetate units, but for the easiness of saponification (hydrolysis), the vinyl ester unit other than vinyl acetate units may often be a unit that is (largely) different from vinyl acetate units, for example, a unit that is easy to saponify or a unit that is difficult to saponify.

The vinyl ester unit other than vinyl acetate units may be a single type or two or more types of vinyl ester units, and

is preferably a few types of vinyl ester units, for example, a single type or two types of vinyl ester units, in particular, a single type of vinyl ester unit to achieve easy synthesis and other purposes.

Specifically, the vinyl ester unit other than vinyl acetate units may be, for example, a vinyl ester unit containing at least one unit selected from a vinyl pivalate unit, a vinyl versatate unit, and a vinyl trifluoroacetate unit, and may be, for example, a vinyl ester unit containing at least a vinyl pivalate unit.

When the vinyl ester units in the PVA are composed of two or more types of vinyl ester units, the percentage or ratio of a given single type of vinyl ester units (e.g., vinyl acetate units) relative to other vinyl ester units (e.g., vinyl ester units other than vinyl acetate units) [a given single type of vinyl ester units (e.g., vinyl acetate units)/other vinyl ester units (e.g., vinyl ester units other than vinyl acetate units); the ratio of y/z or z/y, etc. described later] may be, for example, but is not limited to, 0.0001 to 10000, 0.001 to 1000, 0.01 to 100, 1 or more, 2 or more, 3 or more, 4 or more, 5 or more, less than 1, 0.5 or less, 0.3 or less, 0.25 or less, 0.2 or less, etc.

Provided that the PVA has vinyl alcohol units and vinyl ester units, the PVA may have an additional unit that does not belong to the scope of the vinyl alcohol units or the vinyl ester units (e.g., a unit derived from a monomer, such as a non-vinyl ester-based monomer or a monomer other than a vinyl ester).

Examples of such a monomer (i.e., a non-vinyl ester-based monomer, a monomer other than a vinyl ester, an additional monomer) include, but are not limited to, $\alpha$-olefins, such as ethylene, propylene, n-butene, and isobutylene; (meth)acrylic acid and salts thereof; (meth)acrylic esters, including (meth)acrylic alkyl esters, such as $C_{1-20}$ alkyl (meth) acrylates, such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, dodecyl (meth)acrylate, and octadecyl (meth)acrylate); (meth)acrylamide; (meth)acrylamide derivatives, such as N-methyl(meth)acrylamide, N-ethyl(meth)acrylamide, N,N-dimethyl(meth)acrylamide, diacetone (meth)acrylamide, (meth)acrylamidopropanesulfonic acid and salts thereof, (meth)acrylamidopropyldimethylamine, and salts thereof or quaternary salts thereof, and N-methylol(meth)acrylamide; vinyl ethers, such as $C_{1-20}$ alkyl vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles, such as acrylonitrile and methacrylonitrile; vinyl halides, such as vinyl chloride and vinyl fluoride; vinylidene halides, such as vinylidene chloride and vinylidene fluoride; allyl compounds, such as allyl acetate, allyl chloride, and sodium allylsulfonate; unsaturated dicarboxylic acids, such as maleic acid, itaconic acid, fumaric acid, and salts thereof or esters thereof; vinylsilyl compounds, such as vinyltrimethoxysilane; alkenyl esters of fatty acids, such as isopropenyl acetate; etc.

These monomers (i.e., additional monomers) may be a single type or a combination of two or more types.

When the PVA contains such a unit derived from an additional monomer, the amount of the unit derived from an additional monomer may be, for example, 20 mol or less (or 20 parts by mass or less), e.g., 0.1 to 20 mol (or 0.1 to 20 parts by mass), 10 mol or less (or 15 parts by mass or less), 5 mol or less (or 5 parts by mass or less), 3 mol or less (or 3 parts by mass or less), etc. relative to 100 mol (or 100 parts by mass) of the total amount of the vinyl alcohol units and the vinyl ester units.

The PVA has (at least) vinyl alcohol units and vinyl ester units as described above. Such a PVA may have (or may be a PVA having or a polymer having), for example, a unit represented by the formula (1) below (i.e., a vinyl alcohol unit) and at least one unit selected from a unit represented by the formula (2) below and a unit represented by the formula (3) below (i.e., a vinyl ester unit).

[Chem. 1]

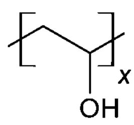

(1)

[Chem. 2]

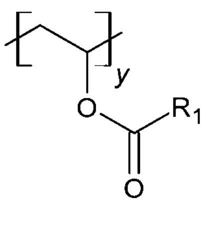

(2)

[Chem. 3]

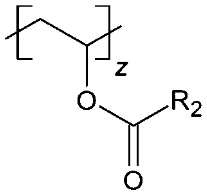

(3)

In the formulae, $R_1$ and $R_2$ are residues derived from different vinyl esters, and x, y, and z are the total number or amount of each unit.

The unit (structure) represented by the above formula (1) is a vinyl alcohol unit, which is typically obtained by saponifying a vinyl ester unit.

The units (structures) represented by the above formulae (2) and (3) are vinyl ester units, and $R_1$ and $R_2$ are residues derived from vinyl esters as described above and are different from each other.

These structures can typically be obtained by using corresponding vinyl esters in the polymerization process.

The residues derived from vinyl esters may be residues derived from the vinyl esters described above, for example, a hydrogen atom (a residue derived from vinyl formate), an aliphatic hydrocarbon group (e.g., a hydrocarbon group of 1 to 10 carbon atoms) or an aromatic hydrocarbon group that does not contain a chlorine atom (in particular, a halogen atom other than a fluorine atom) [e.g., an aliphatic hydrocarbon group (e.g., an alkyl group) or an aromatic hydrocarbon group that may have a fluorine atom, such as a methyl group (a residue derived from vinyl acetate), a t-butyl group (a residue derived from vinyl pivalate), a trifluoromethyl group (a residue derived from vinyl trifluoroacetate), an ethyl group, a n-propyl group, an isopropyl group, a n-butyl group, a sec-butyl group, an iso-butyl group, a n-heptyl group, a neopentyl group, an isopentyl group, a sec-pentyl group, a 3-pentyl group, a tert-pentyl group, an octyl group, a nonyl group, a decyl group, or a phenyl group], an aliphatic hydrocarbon group (e.g., a hydrocarbon group of 1 to 10 carbon atoms) that has a halogen atom other than a fluorine atom (e.g., a chlorine atom) [e.g., the aliphatic hydrocarbon group exemplified above that is substituted with one or more halogen atoms other than a fluorine atom (e.g., a chlorine atom), such as a chloromethyl group (a residue derived from vinyl monochloroacetate)], etc.

The vinyl ester units preferably do not contain a vinyl ester unit having a halogen atom other than a fluorine atom (e.g., a chlorine atom) (e.g., do not contain a vinyl monochloroacetate unit), or even when the vinyl ester units contain a vinyl ester unit having a halogen atom other than a fluorine atom, the amount of such a vinyl ester unit is preferably in a small amount relative to the total amount of the vinyl ester units, for example, in an amount of 30 mol% or less, 20 mol% or less, 15 mol% or less, 10 mol% or less, 5 mol% or less, or 1 mol% or less, as described above.

Accordingly, both $R_1$ and $R_2$ preferably do not contain a residue derived from a vinyl ester having a halogen atom other than a fluorine atom (e.g., a chlorine atom) (e.g., do not contain a monochloromethyl group), or even when both $R_1$ and $R_2$ contain a residue derived from a vinyl ester having a halogen atom other than a fluorine atom, the amount of such a residue is preferably in a small amount relative to the total amount of $R_1$ and $R_2$ (y + z), for example, in an amount of 30 mol% or less, 20 mol% or less, 15 mol% or less, 10 mol% or less, 5 mol% or less, or 1 mol% or less.

In the formulae, $R_1$ and $R_2$ are different from each other, and may be a combination of, for example, a methyl group (e.g., $R_1$ is a methyl group) and a group other than a methyl group (e.g., a group other than a methyl group, such as t-butyl).

$R_1$ may typically be a single type of group (residue), and $R_2$ may be a single type or two or more types of different groups (residues).

Since a vinyl ester as an ingredient is easily available and the block character of the resulting polymer should be easily controlled, either of $R_1$ and $R_2$ is preferably a methyl group or a tert-butyl group, and more preferably, $R_1$ is a methyl group and $R_2$ is a tert-butyl group.

In the above formula, x is the total number or amount of units (structures) represented by the formula (1) (the total number or amount of units (structures) represented by the formula (1) in the polymer or the PVA). In other words, x does not denote that x number of units represented by the formula (1) are continuously linked.

x is defined as described above, and may be selected from the range of about 10 or more, for example, 15 or more. To easily achieve the desired functions (good amphiphilicity etc.), the block character, the hydrodynamic radius as described above, etc. (or to easily and efficiently achieve all of these), x is, for example, about 20 or more, preferably about 30 or more, more preferably about 40 or more, e.g., 45 or more, and may be, 50 or more, e.g., 55 or more, 60 or more, 65 or more, 70 or more, 80 or more, 85 or more, 90 or more, 95 or more, 100 or more, 120 or more, 150 or more, etc.

The upper limit of x may be, for example, but is not limited to, 5000, 4000, 3000, 2000, 1500, 1200, 1000, 900, 800, 700, 600, 500, 450, 400, 350, 300, less than 300, 290, 280, 270, 260, 250, 240, 230, 220, 210, 200, 180, 150, 120, 100, etc.

When x is not excessively high (for example, 1000 or less etc.), the polymerization is easy to control.

Specifically, x may be, for example, 30 to 1000, 40 to 1000, 40 to 700, 50 to 400, etc.

In the above formulae, y is the total number or amount of units (structures) represented by the formula (2), and z is the total number or amount of units (structures) represented by the formula (3) (y is the total number or amount of units (structures) represented by the formula (2) in the polymer or the PVA, and z is the total number or amount of units (structures) represented by the formula (3) in the polymer or the PVA). In other words, y does not denote that y number of units represented by the formula (2) are continuously linked, or z does not denote that z number of units represented by the formula (3) are continuously linked.

The values of y and z are zero or more than zero (finite values). However, y and z are not simultaneously zero.

y + z is defined as described above, and may be selected from the range of about 2 or more, for example, 3 or more. To easily achieve the desired functions (good amphiphilicity etc.), the block character, the hydrodynamic radius as described above, etc. (or to easily and efficiently achieve all of these), y + z may be, for example, about 3.5 or more, preferably about 4 or more, and more preferably about 4.5 or more, e.g., 5 or more, and may be 6 or more, e.g., 6.5 or more, 7 or more, 7.5 or more, 8 or more, 8.5 or more, 9 or more, 9.5 or more, 10 or more, 10.5 or more, 11 or more, etc.

The upper limit of y + z may be, for example, but is not limited to, 3000, 2000, 1500, 1200, 1000, 900, 800, 700, 600, 500, 450, 400, 350, 300, less than 300, 290, 280, 270, 260, 250, 240, 230, 220, 210, 200, 180, 150, 120, 100, 80, 70, 60, 50, 40, 30, 20, 18, 15, 12, etc.

When y + z is not excessively high (for example, 500 or less etc.), the polymerization is easy to control.

Specifically, y + z may be, for example, 4 to 500, 6 to 300, 8 to 200, etc.

When both y and z are more than zero, the ratio y/z is as defined above, and may be, for example, but is not limited to, about 0.0001 to 10000, about 0.001 to 1000, or about 0.01 to 100.

x + y + z is defined as described above, and may be selected from the range of about 20 or more, for example, 30 or more. To easily achieve the desired functions (good amphiphilicity etc.), the block character, the hydrodynamic radius as described above, etc. (or to easily and efficiently achieve all of these), x + y + z may be, for example, about 35 or more, preferably about 40 or more, and more preferably about 50 or more, e.g., 55 or more, and may be 60 or more, e.g., 65 or more, 70 or more, 75 or more, 80 or more, 85 or more, 90 or more, 95 or more, 100 or more, 105 or more, 110 or more, 120 or more, 130 or more, 140 or more, 150 or more, etc.

The upper limit of x + y + z may be, for example, but is not limited to, 10000, 8000, 7000, 6000, 5000, 4000, 3000, 2000, 1500, 1200, 1000, 900, 800, 700, 600, 500, 450, 400, 350, 300, less than 300, 290, 280, 270, 260, 250, 240, 230, 220, 210, 200, etc.

When x + y + z is not excessively high (for example, 1000 or less etc.), the polymerization is easy to control.

Specifically, x + y + z is, for example, 40 to 1000, 50 to 1000, 60 to 700, 70 to 500, etc.

The value of x/(x + y + z) × 100% (mol%) is defined as described above, and may be selected from the range of about 99 mol% or less or about 99% or less. To easily achieve the desired functions (for example, the solubility in water, the easiness of the formation of associates, etc.), the block character, and the hydrodynamic radius as described above, etc. (or to easily and efficiently achieve all of these), the value of x/(x + y + z) × 100% (mol%) may be about 98% or less, e.g., 97 mol% or less, preferably about 96 mol% or less, e.g., 95 mol% or less, and more preferably about 94 mol% or less, e.g., 93.5 mol% or less, and may be 93 mol% or less, e.g., 92 mol% or less, 91 mol% or less, 90 mol% or less, less than 90 mol%, 89.5 mol% or less, 89 mol%, 88 mol% or less, 87 mol% or less, 86 mol% or less, 85 mol% or less, 84 mol% or less, 83 mol% or less, 82 mol% or less, 81 mol% or less, 80 mol% or less, less than 80 mol%, 79 mol% or less, 78 mol% or less, 77 mol% or less, 76 mol% or less, 75 mol% or less, 74 mol% or less, 73 mol% or less, 72 mol% or less, 71 mol% or less, 70 mol% or less, less than 70 mol%, 69 mol% or less, 68 mol% or less, 67 mol% or less, 66 mol% or less, 65 mol% or less, 64 mol% or less, 63 mol% or less, 62 mol% or less, 61 mol% or less, 60 mol% or less, less than 60 mol%, 59 mol% or less, 58 mol% or less, 57 mol% or less, 56 mol% or less, 55 mol% or less, 54 mol% or less, 53 mol% or less, 52 mol% or less, 51 mol% or less, 50 mol% or less, less than 50 mol%, etc.

The value of x/(x + y + z) × 100% (mol%) is defined as described above, and can be selected depending on the desired characteristics (e.g., the solubility in water, the easiness of the formation of associates, etc.) etc., and may be selected from, for example, the range of about 10 mol% or more or about 10% or more. The value of x/(x + y + z) × 100% (mol%) may be about 12 mol% or more, e.g., 15 mol% or more, preferably about 20 mol% or more, e.g., 25 mol% or more, and more preferably about 30 mol% or more, e.g., 35 mol% or more, or 38 mol% or more, and may be 40 mol% or more, e.g., more than 40 mol%, 41 mol% or more, 42 mol% or more, 43 mol% or more, 44 mol% or more, 45 mol% or more, 46 mol% or more, 47 mol% or more, 48 mol% or more, 49 mol% or more, 50 mol% or more, more than 50 mol%, 51 mol% or more, 52 mol% or more, 53 mol% or more, 54 mol% or more, 55 mol% or more, 56 mol% or more, 57 mol% or more, 58 mol% or more, 59 mol% or more, 60 mol% or more, more than 60 mol%, 61 mol% or more, 62 mol% or more, 63 mol% or more, 64 mol% or more, 65 mol% or more, 66 mol% or more, 67 mol% or more, 68 mol% or more, 69 mol% or more, 70 mol% or more, more than 70 mol%, 71 mol% or more, 72 mol% or more, 73 mol% or more, 74 mol% or more, 75 mol% or more, 76 mol% or more, 77 mol% or more, 78 mol% or more, 79 mol% or more, 80 mol% or more, more than 80 mol%, 81 mol% or more, 82 mol% or more, 83 mol% or more, 84 mol% or more, 85 mol% or more, 86 mol% or more, 87 mol% or more, 88 mol% or more, 89 mol% or more, 90 mol% or more, more than 90 mol%, 91 mol% or more, etc.

Specifically, the value of x/(x + y + z) × 100% (mol%) may be, for example, 40 to 96 mol%, 50 to 94 mol%, 60 to 92

mol%, etc.

When the PVA has a unit represented by the formula (1) and at least one unit selected from a unit represented by the formula (2) and a unit represented by the formula (3), the PVA may further have an additional unit (a unit does not belong to the scope of a unit represented by any of the formulae (1) to (3)).

Such a unit may be a unit derived from the additional monomer described above.

When the PVA has such a unit derived from an additional monomer, the amount of the unit derived from an additional monomer may be, for example, 20 mol or less (or 20 parts by mass or less), e.g., 0.1 to 20 mol (or 0.1 to 20 parts by mass), or 10 mol or less (or 15 parts by mass or less), 5 mol or less (or 5 parts by mass or less), 3 mol or less (or 3 parts by mass or less), etc. relative to 100 mol (or 100 parts by mass) of the total amount of a unit represented by the formula (1) and at least one unit selected from a unit represented by the formula (2) and a unit represented by the formula (3).

Production method of PVA

The method for producing the PVA is not limited to a particular one, and the PVA can be produced by, for example, steps including at least the following steps 1, 2 and 3:

step 1) subjecting a first vinyl ester to living radical polymerization to synthesize a macro-chain transfer agent,
step 2) subjecting a second vinyl ester different from the first vinyl ester to living radical polymerization in the presence of the macro-chain transfer agent obtained in step 1 to synthesize a block copolymer, and
step 3) partially saponifying the block copolymer obtained by at least step 2.

Step 1: subjecting first vinyl ester to living radical polymerization

The living radical polymerization method is preferably reversible addition-fragmentation chain-transfer polymerization (hereinafter referred to as RAFT polymerization).

RAFT polymerization is a type of living radical polymerization using a thiocarbonyl compound (RAFT agent) as a chain transfer agent. RAFT polymerization can be used to synthesize a polymer with a narrow molecular weight distribution while controlling the molecular weight.

Examples of the vinyl ester (vinyl ester-based monomer) used in step 1 include those exemplified above (monomers corresponding to vinyl ester units), for example, vinyl esters of fatty acids, such as vinyl acetate, vinyl formate, vinyl propionate, vinyl butyrate, vinyl isobutyrate, vinyl caproate, vinyl caprylate, vinyl versatate (trade name: VeoVa9 or VeoVa10, manufactured by HEXION, Inc., etc.), vinyl pivalate (pivalic acid), or vinyl trifluoroacetate; and aromatic vinyl esters, such as vinyl benzoate. Among these, vinyl acetate or vinyl pivalate is suitable.

The vinyl ester should be different from a second vinyl ester (vinyl ester-based monomer) used in step 2. It should be noted that vinyl monochloroacetate or the like is preferably not used or may be used only in a small amount because vinyl monochloroacetate or the like may serve as a cause of color development of the polymer as described above, or may serve as a hindrance to increasing the degree of polymerization due to chain transfer (for example, by a chloromethyl group).

The polymerization method may be a known polymerization method, such as bulk polymerization, solution polymerization, suspension polymerization, or emulsion polymerization. Among these, bulk polymerization, which is performed without a solvent, or solution polymerization, in which polymerization is performed in various types of organic solvents, is typically employed. Bulk polymerization is preferred in that a fast rate of polymerization is achieved, and the solvent may not cause chain transfer or a reaction with the RAFT agent. Solution polymerization is preferred in that the viscosity of the polymerization reaction solution and the rate of polymerization can be controlled by adding an organic solvent. Examples of the organic solvent used in solution polymerization include esters such as methyl acetate and ethyl acetate; aromatic hydrocarbons such as benzene and toluene; lower alcohols such as methanol and ethanol; ethers such as diethyl ether and tetrahydrofuran (THF); etc. The amount of the solvent used may be determined depending on the desired number average molecular weight of the polymer and the reaction yield, taking into account the viscosity of the reaction solution. For example, the mass ratio of the solvent/the monomers is selected from the range of 0.01 to 10. A suitable mass ratio of the solvent/the monomers is 0.1 or more, and a suitable mass ratio of the solvent/the monomers is 5 or less.

The RAFT agent used in step 1 is preferably a dithiocarbamate-type RAFT agent (R-S-C(=S)-N(Z1Z2)), or a xanthate-type RAFT agent (R-S-C(=S)-O-Z). The dithiocarbamate-type RAFT agent is preferably cyanomethyl methyl(phenyl)carbamodithioate, or cyanomethyl diphenylcarbamodithioate. The xanthate-type RAFT agent is preferably ethyl 2-[(ethoxycarbonothioyl)thio]propionate.

In RAFT polymerization in theory, when one RAFT agent molecule is added, one polyvinyl ester chain is generated. The amount of the RAFT agent added is determined taking into account the desired number average molecular weight and the desired polymerization percentage. Typically, 0.01 to 2 mol of the RAFT agent is preferably used for 100 mol

of the vinyl ester monomers.

A radical initiator is used in step 1, and is selected as appropriate from conventionally known azo initiators, peroxide initiators, redox initiators, photopolymerization initiators, and the like. Examples of the azo initiators include 2,2'-azobisisobutyronitrile (AIBN), 2,2'-azobis(2,4-dimethylvaleronitrile) (ADVN), 2,2'-azobis(4-methoxy-2,4-dimethylvaleronitrile) (V-70), etc. Examples of the peroxide initiators include percarbonate compounds, such as din-propyl peroxydicarbonate, diisopropyl peroxydicarbonate, di-2-ethylhexyl peroxydicarbonate, and diethoxyethyl peroxydicarbonate; perester compounds, such as t-butyl peroxyneodecanoate, $\alpha$-cumyl peroxyneodecanoate, and t-butyl peroxyneodecanoate; acetyl cyclohexyl sulfonyl peroxide, and diisobutyryl peroxide; 2,4,4-trimethylpentyl-2-peroxyphenoxyacetate; etc.

The amount by mole of the radical initiator used is preferably 0.1- to 5-fold the amount by mole of the RAFT agent, and is determined taking into account the type of radical initiator used (the efficiency and the half-life temperature of the initiator), the polymerization temperature, and the like. If the amount by mole of the radical initiator is small, an adequate rate of reaction is difficult to achieve and the induction phase may occur. If the amount by mole of the radical initiator is excessively large, the amount by mole of generated radicals may be larger than the amount by mole of the RAFT agent and uncontrolled radical polymerization may increase in proportion, and as a result, a block copolymer may be difficult to obtain in step 2.

The polymerization temperature is preferably, for example, 0°C to 80°C. If the polymerization temperature is less than 0°C, the rate of polymerization is insufficient and the productivity is reduced. For this reason, the polymerization temperature is more preferably 10°C or more, further preferably 20°C or more. If the polymerization temperature exceeds 80°C, RAFT polymerization is difficult to control. For this reason, the polymerization temperature is more preferably 70°C or less, further preferably 60°C or less.

When the desired polymerization percentage is achieved in this polymerization step, the polymerization reaction is terminated by cooling or other means, and an unreacted vinyl ester may be removed. Removal of the unreacted vinyl ester may be performed by adding the reaction mixture dropwise to a poor solvent, such as hexane, and collecting the precipitated polymer. Alternatively, the unreacted vinyl ester may be removed by vacuum drying. The vinyl esters may be completely consumed by carrying out the polymerization to a polymerization percentage of 100%. In this case, solution polymerization is preferably performed by adding an organic solvent. The polyvinyl ester polymer obtained in this manner is used as a chain transfer agent (macro-RAFT agent) in the subsequent step 2.

Step 2: synthesizing block copolymer of polyvinyl ester

RAFT polymerization of a vinyl ester monomer that is different from the vinyl ester monomer used in step 1 is performed using the polyvinyl ester polymer obtained in step 1 as a chain transfer agent (macro-RAFT agent) to synthesize, for example, an A-B type block copolymer composed of two types of polyvinyl esters.

Examples of the second vinyl ester (vinyl ester-based monomer) used in step 2 include those exemplified above for step 1, including vinyl esters of fatty acids, such as vinyl acetate, vinyl formate, vinyl propionate, vinyl butyrate, vinyl isobutyrate, vinyl caproate, vinyl caprylate, vinyl versatate (trade name: VeoVa9 or VeoVa10, manufactured by HEXION, Inc., etc.), vinyl pivalate (pivalic acid), or vinyl trifluoroacetate; and aromatic vinyl esters, such as vinyl benzoate. The second vinyl ester should be different from the first vinyl ester used in step 1. Vinyl chloroacetate or the like is preferably not used or may be used only in a small amount, as described above.

When vinyl acetate is used as the first vinyl ester, the second vinyl ester is a vinyl ester other than vinyl acetate. When vinyl pivalate is used as the first vinyl ester, the second vinyl ester is a vinyl ester other than vinyl pivalate. Preferably, the hydrolysis resistance of ester groups in the first vinyl ester is largely different from that in the second vinyl ester. In the subsequent saponification step, ester groups that are less resistant to hydrolysis are selectively saponified to give a PVA (a partially saponified polyvinyl alcohol) with a more blocky nature.

The hydrolysis resistance of ester groups depends on the structure (stereostructural factors and electronic factors) of the vinyl ester groups. For this reason, the combination of the first vinyl ester and the second vinyl ester is preferably a combination of compounds with greatly different stereo structures, such as a combination of vinyl acetate and vinyl pivalate (pivalic acid).

The polymerization method for the vinyl ester in step 2 may be a known polymerization method, such as bulk polymerization, solution polymerization, suspension polymerization, or emulsion polymerization. As with step 1, bulk polymerization, which is performed without a solvent, or solution polymerization, in which polymerization is performed in various types of organic solvents, is typically employed. Bulk polymerization is preferred in that a fast rate of polymerization is achieved, and the solvent may not cause chain transfer or a reaction with the RAFT agent. Solution polymerization is preferred in that the viscosity of the polymerization reaction solution and the rate of polymerization can be controlled by adding an organic solvent. Examples of the organic solvent used in solution polymerization include esters such as methyl acetate and ethyl acetate; aromatic hydrocarbons such as benzene and toluene; lower alcohols such as methanol and ethanol; ethers such as diethyl ether and tetrahydrofuran (THF); etc. The amount of the solvent used may be determined

depending on the desired number average molecular weight of the polymer and the reaction yield, taking into account the viscosity of the reaction solution. For example, the mass ratio of the solvent/the monomers is selected from the range of 0.01 to 10. A suitable mass ratio of the solvent/the monomers is 0.1 or more, and a suitable mass ratio of the solvent/the monomers is 5 or less.

The RAFT agent used in step 2 is the polyvinyl ester polymer obtained in step 1, and is used as a chain transfer agent (macro-RAFT agent) to perform RAFT polymerization of the second vinyl ester to synthesize an A-B type block copolymer. The amount of the RAFT agent added is determined taking into account the desired number average molecular weight and the desired polymerization percentage. Typically, 0.1 to 10 mol of the RAFT agent is preferably used for 100 mol of the vinyl ester monomers.

A radical initiator is used in step 2, and is selected as appropriate from conventionally known azo initiators, peroxide initiators, redox initiators, photopolymerization initiators, and the like. The initiator used in step 1 may be directly used.

The amount by mole of the radical initiator used is preferably 0.1- to 5-fold the amount by mole of the RAFT agent, and is determined taking into account the type of radical initiator used (the efficiency and the half-life temperature of the initiator), the polymerization temperature, and the like. If the amount by mole of the radical initiator is small, an adequate rate of reaction is difficult to achieve and the induction phase may occur. If the amount by mole of the radical initiator is excessively large, the amount by mole of generated radicals may be larger than the amount by mole of the RAFT agent and uncontrolled radical polymerization may increase in proportion, which may trigger the generation of a homopolymer of the second vinyl ester.

The polymerization temperature is preferably, for example, 0°C to 80°C. If the polymerization temperature is less than 0°C, the rate of polymerization is insufficient and the productivity is reduced. For this reason, the polymerization temperature is more preferably 10°C or more, further preferably 20°C or more. If the polymerization temperature exceeds 80°C, RAFT polymerization is difficult to control. For this reason, the polymerization temperature is more preferably 70°C or less, further preferably 60°C or less.

When the desired polymerization percentage is achieved in the polymerization process in step 2, the polymerization reaction is terminated by cooling, the addition of a polymerization inhibitor or other means, and an unreacted vinyl ester may be removed. As with step 1, removal of the unreacted vinyl ester may be performed by adding the reaction mixture dropwise to a poor solvent, such as hexane, and collecting the precipitated polymer. Alternatively, the unreacted vinyl ester may be removed by vacuum drying. In this manner, an A-B type diblock copolymer composed of two types of polyvinyl ester segments can be obtained.

The diblock polymer obtained in step 2 can be used as a chain transfer agent (macro-RAFT agent) to perform RAFT polymerization of a vinyl ester (a third vinyl ester) that is different from the vinyl ester used in step 2 to synthesize a A-B-C type or A-B-A type triblock copolymer.

Examples of the third vinyl ester include those exemplified above for step 1, including vinyl esters of fatty acids, such as vinyl acetate, vinyl formate, vinyl propionate, vinyl butyrate, vinyl isobutyrate, vinyl caproate, vinyl caprylate, vinyl versatate, vinyl pivalate (pivalic acid), or vinyl trifluoroacetate; and aromatic vinyl esters, such as vinyl benzoate. The third vinyl ester should be different from the second vinyl ester used in step 2. Vinyl chloroacetate or the like is preferably not used or may be used only in a small amount, as described above. When the same vinyl ester as that used in step 1 is used, an A-B-A type triblock copolymer can be synthesized, whereas when a different vinyl ester from that used in step 1 is used, an A-B-C type triblock copolymer can be synthesized. The synthetic method of such a triblock copolymer is the same as that for producing the diblock copolymer described above.

Further, fourth or more vinyl esters may be used to repeat a similar step.

If necessary, an additional monomer may be polymerized as appropriate before and/or after step 3 (in particular, before step 3) (for example, an additional monomer may be copolymerized with the first, second and/or third vinyl ester).

Step 3: partially saponifying block copolymer of polyvinyl ester

The block copolymer (polyvinyl ester block copolymer) having multiple polyvinyl ester segments obtained by at least step 2 is partially saponified. The ester groups in the vinyl ester units in the polyvinyl ester vary in their hydrolysis resistance, and hence when such ester groups are subjected to appropriate saponification conditions, different degrees of hydrolysis can be achieved for different segments. In other words, hydrolysis can be reduced in a polyvinyl ester segment with relatively higher hydrolysis resistance (for example, a polyvinyl pivalate segment), while sufficient hydrolysis can be induced in a polyvinyl ester segment with relatively lower hydrolysis resistance (for example, a polyvinyl acetate segment), thereby producing an amphiphilic partially saponified polyvinyl alcohol composed of a polyvinyl ester-rich segment and a vinyl alcohol-rich segment.

The saponification of the polyvinyl ester block copolymer may be performed by any method in accordance with a conventionally known method. For example, alcoholysis or hydrolysis is applicable using a conventionally known basic catalyst, such as sodium hydroxide, potassium hydroxide, sodium carbonate, sodium carbonate or sodium methoxide, or

a conventionally known acidic catalyst, such as sulfuric acid or p-toluenesulfonic acid. The solvent used in the saponification reaction may be, for example, in addition to water, an alcohol such as methanol or ethanol; an ester such as methyl acetate or ethyl acetate; a ketone such as acetone or methyl ethyl ketone; an aromatic hydrocarbon such as benzene or toluene; etc. The solvent may be a single type or a combination of two or more types. Preferably, the saponification reaction is conveniently performed using methanol or a mixed solution of methanol and methyl acetate as a solvent in the presence of sodium hydroxide.

The saponification reaction can be controlled by adjusting the saponification temperature, the saponification time, the type of catalyst, the amount of the catalyst used, the concentration of the polyvinyl ester block copolymer, the water content, etc.

The saponification temperature can typically be selected from the range of 20°C to 70°C, and is preferably in the range of 30°C to 60°C. The saponification time is typically selected from the range of 5 minutes to 5 hours, and is preferably in the range of 10 minutes to 1 hour. The amount of the catalyst used can typically be selected from the range of 0.2 to 10 mol% based on the amount of the vinyl ester units in the polyvinyl ester block copolymer, and is preferably in the range of 0.4 to 5 mol%. When methanol is used as the solvent, the concentration of the polyvinyl ester block copolymer can typically be selected from the range of 5 to 70% by mass, and is preferably 10 to 60%. The water content can typically be selected from the range of 0 to 5% by mass, and is preferably 0.2 to 2% by mass.

When the saponification conditions are excessively harsh, not only the vinyl ester groups with lower hydrolysis resistance, but also the vinyl ester groups with higher hydrolysis resistance may be saponified. In such a case, the block character of the resulting PVA tends to be reduced.

On the other hand, when the saponification conditions are excessively mild, saponification of the vinyl ester groups with lower hydrolysis resistance may be insufficient. Also in such a case, the block character of the resulting PVA tends to be reduced.

As illustrated above, the PVA described above can be efficiently produced.

Aqueous liquid

The PVA may be dissolved or dispersed in water or an aqueous medium containing water as described above.

Thus the present invention also includes an aqueous liquid containing the PVA (e.g., an aqueous solution, a dispersion in water, a solution or dispersion in an aqueous medium, e.g., in a mixed solvent of water and an organic solvent, such as a hydrophilic solvent, such as an alcohol).

The amount of the PVA (or associates formed from the PVA) in the aqueous liquid is not particularly limited, and may be selected from, for example, the range of about 0.00001% by mass or more, may be, for example, 0.00005% by mass or more, or may be 0.0001% by mass or more, e.g., 0.0005% by mass or more, preferably 0.001% by mass or more, e.g., 0.005% by mass or more, 0.01% by mass or more, 0.05% by mass or more, 0.1% by mass or more, 0.5% by mass or more, and may be 90% by mass or less, e.g., 80% by mass or less, 50% by mass or less, 30% by mass or less, 20% by mass or less, 10% by mass or less, 5% by mass or less, 3% by mass or less, 2% by mass or less, 1% by mass or less, 0.5% by mass or less, etc.

The PVA in such an aqueous liquid may form associates (micelles). The present invention also includes such associates (micelles).

When the PVA forms associates, the size or the hydrodynamic radius of the associates may be a similar size as defined above, for example, 10 to 200 nm, or the like.

The associates (or micelles) may contain or encapsulate a cargo, such as a drug (e.g., a hydrophobic drug), a hydrophobic substance, a hydrophilic substance, or the like. The present invention also includes such associates (micelles or a formulation).

In particular, the cargo may be a hydrophobic substance.

The hydrophobic substance (or a hydrophobic material, for example, a hydrophobic drug etc.) may be a substance or material whose solubility in 100 mL (100 g) of water at 20°C (solubility at 20°C) is, for example, 500 mg (500 mg/100 g $H_2O$) or less, 300 mg or less, 200 mg or less, 100 mg or less, 50 mg or less, e.g., 30 mg or less, 20 mg or less, 10 mg or less, 5 mg or less, 3 mg or less, 2 mg or less, 1.5 mg or less, 1.2 mg or less, 1 mg or less, 0.8 mg or less, 0.5 mg or less, 0.3 mg or less, 0.2 mg or less, etc.

The amount of the cargo (e.g., a hydrophobic substance) in the associates (the micelles, or the associates or micelles containing the cargo) may be selected from, for example, the range of about 0.0001 parts by mass or more relative to 100 parts by mass of the PVA, may be, for example, 0.001 parts by mass or more, or may be 0.01 parts by mass or more, e.g., 0.05 parts by mass or more, preferably 0.1 parts by mass or more, e.g., 0.5 parts by mass or more, 1 part by mass or more, 3 parts by mass or more, 5 parts by mass or more, 10 parts by mass or more, etc., and may be 1000 parts by mass or less, e.g., 500 parts by mass or less, 300 parts by mass or less, 200 parts by mass or less, 100 parts by mass or less, 80 parts by mass or less, 50 parts by mass or less, 40 parts by mass or less, 30 parts by mass or less, 20 parts by mass or less, 10 parts by mass or less, etc.

EXAMPLES

The present invention will be specifically described in more detail below with reference to Examples, but the present invention is not limited thereto.

The terms "%" and "parts" in the Examples and the Comparative Examples below mean "% by mass" and "parts by mass," respectively, unless otherwise specified.

Calculation methods for theoretical degree of polymerization and theoretical number average molecular weight $M_n$ (theoretical) of polyvinyl esters (PVE1)

The theoretical degree of polymerization and the theoretical number average molecular weight $M_n$ (theoretical) were calculated by the following calculation equations, respectively.

Theoretical degree of polymerization = (amount by mole of input vinyl ester (VE1)/amount by mole of input RAFT agent) × reaction percentage of vinyl ester (VE1).

The theoretical degree of polymerization of the PVE2 component of a polyvinyl ester block copolymer (PVE1-b-PVE2) can also be calculated in the same manner as in the above equation using the reaction percentage of VE2.

Theoretical number average molecular weight: $M_n$ (theoretical) = molecular weight of RAFT agent + molecular weight of vinyl ester (VE1) × theoretical degree of polymerization.

Measurement methods for number average molecular weight $M_n$ (by GPC) and molecular weight distribution $M_w/M_n$ of polyvinyl esters

The number average molecular weight $M_n$ (by GPC) and the molecular weight distribution $M_w/M_n$ were determined as the polystyrene-equivalent molecular weights by gel permeation chromatography (GPC) using a high-speed liquid chromatograph equipped with a detector. The specific measurement conditions are as follows:

- mobile phase: tetrahydrofuran (THF),
- flow rate: 1.0 mL/min,
- column: KF-804L (manufactured by Shoko Science Co., Ltd.), two serially connected columns,
- column temperature: 40°C,
- sample concentration: 0.1 wt/vol%,
- amount of injected sample: 100 μL,
- detector: refractive index (RI) detector, and
- standard: polystyrene.

Measurement methods for number average molecular weight $M_n$ (by GPC) and molecular weight distribution $M_w/M_n$ of completely saponified polyvinyl alcohols

The number average molecular weight $M_n$ (by GPC) and the molecular weight distribution $M_w/M_n$ were determined as the polyethylene glycol (PEG)-equivalent molecular weights by gel permeation chromatography (GPC) using a high-speed liquid chromatograph equipped with a detector. The specific measurement conditions are as follows:

- mobile phase: 0.05 mol/L sodium nitrate aqueous solution,
- flow rate: 1.0 mL/min,
- column: SB-804 HQ (manufactured by Shoko Science Co., Ltd.), two serially connected columns,
- column temperature: 50°C,
- sample concentration: 0.1 wt/vol%,
- amount of injected sample: 100 μL,
- detector: refractive index (RI) detector, and
- standard: polyethylene glycol (PEG).

Method for determining composition of partially saponified polyvinyl alcohols

The calculation method for the amounts of respective units (x, y, z) of a partially saponified polyvinyl alcohol

obtained by partially saponifying a block copolymer produced by using vinyl acetate as VE1 and vinyl pivalate as VE2 as in Example C1 will be described below by way of example.

First, the obtained partially saponified polyvinyl alcohol is dissolved in d6-DMSO, and subjected to $^1$H-NMR measurement (measurement temperature = 100°C) to determine the following integral values A to C of signals:

- integral value of signals at 1.0 to 1.18 ppm (the methyl protons of the pivalic acid group) = A,
- integral value of signals at 1.18 to 1.88 ppm (the methylene protons of the backbone) = B, and
- integral value of signals at 1.9 to 2.06 ppm (the methyl proton of the acetic acid group) = C.

Then, the number x of vinyl alcohol units, the number y of vinyl acetate units, and the number z of vinyl pivalate units contained in the partially saponified polyvinyl alcohol (the degree of polymerization = P) were calculated by the calculation equations below using the integral values A to C obtained above.

- The number of vinyl alcohol units: $x = P - y - z$.
- The number of vinyl acetate units: $y = ((C/3)/(B/2)) \times P = 2CP/3B$.
- The number of vinyl pivalate units: $z = ((A/9)/(B/2)) \times P = 2AP/9B$.

The degree of polymerization P may be the theoretical degree of polymerization as described above. Alternatively, the degree of polymerization P may be the degree of polymerization calculated from the molecular weight (the number average molecular weight Mn, the weight average molecular weight Mw, etc.) of a completely saponified polyvinyl alcohol, or the molecular weight (the number average molecular weight Mn, the weight average molecular weight Mw, etc.) of a polyvinyl ester obtained by re-esterification (acetylation etc.) (the degree of polymerization is calculated as the molecular weight of the polyvinyl alcohol/the molecular weight of vinyl alcohol units, or the molecular weight of the polyvinyl alcohol/the molecular weight of vinyl ester units) (In the Examples, the theoretical degree of polymerization was used).

Measurement method for block character

The calculation method for the block character of a partially saponified polyvinyl alcohol obtained by partially saponifying a block copolymer produced by using vinyl acetate as VE1 and vinyl pivalate as VE2 as in Example C1 will be described below by way of example.

The obtained partially saponified polyvinyl alcohol (PVA) was dissolved at a ratio of PVA:HFIP:$D_2O$ = 1:4:1 (weight ratio) and then subjected to $^{13}$C-NMR measurement (measurement temperature = 30°C, the number of integration = 20,000) using a 400 MHz nuclear magnetic resonance spectrometer manufactured by Bruker Corporation to determine the following integral values A to D of signals (HFIP = 1,1,1,3,3,3-hexafluoro-2-propanol):

- Integral value A = signals at 37.2 to 40.4 ppm attributed to (OCOR, OCOR) and the quaternary carbon of the pivalic acid group,
- Integral value B = signals at 38.3 to 38.8 ppm attributed to the quaternary carbon of the pivalic acid group,
- Integral value C = signals at 40.4 to 41.8 ppm attributed to (OH, OCOR), and
- Integral value D = signals at 41.8 to 44.9 ppm attributed to (OH, OH).

Then, the integral values are used to calculate the block character ($\eta$) by the following equation:

- Block character ($\eta$) = (OH, OCOR)/[2(OH)(OCOR)],

wherein (OH, OCOR), (OH), and (OCOR) are calculated as follows:

- (OH, OCOR) = C,
- (OH) = (OH, OH) + (OH, OCOR)/2,
- (OCOR) = (OCOR, OCOR) + (OH, OCOR)/2.

(OH, OH) and (OCOR, OCOR) are calculated as follows:

- (OH, OH) = D
- (OCOR, OCOR) = A - B.

Measurement of hydrodynamic radius (by DLS)

The obtained partially saponified polyvinyl alcohol was dissolved in water, and the size of the resulting associates (micelles) was determined by DLS (Dynamic Light Scattering).
Specifically, the obtained partially saponified polyvinyl alcohol was dissolved in water to a concentration of 1 g/L, and filtered through a membrane filter with a pore size of 1 μm. The hydrodynamic radius was measured at 25°C using the sample solution with Zetasizer Nano ZS (He-Ne laser, 4 mW at 632.8 nm) manufactured by Malvern Ltd.

Measurement of YI

A 1% by weight solution of the obtained partially saponified polyvinyl alcohol in DMSO was prepared, and the UV-Vis spectrum of the solution (in a quartz cell with a 10 mm optical path length) was measured at 20°C using an ultraviolet-visible spectrometer (manufactured by JASCO Corporation; V-730). The YI of the 1% by weight solution of the partially saponified polyvinyl alcohol in DMSO was calculated from the resulting data.

Measurement of chlorine content (using combustion ion chromatograph)

The chlorine content of a sample was measured using a sample combustion device AQF-2100H manufactured by Nittoseiko Analytech Co., Ltd. and an ion chromatograph manufactured by Thermo Fisher Scientific Inc.

Synthesis of RAFT polymer of polyvinyl ester (PVE1)

Synthetic Example A1

To a reaction vessel were added 100 parts by mass of vinyl acetate (VAc) and 3.3 parts by mass of cyanomethyl diphenylcarbamodithioate (CDC), and the mixture was degassed by introducing nitrogen into the reaction vessel for 15 minutes. The reaction vessel was placed in a hot water bath at 40°C, and 1.4 parts by mass of V-70 [2,2'-azobis(4-methoxy-2,4-dimethylvaleronitrile)] was added to react at 40°C for 24 hours (at an input mole ratio of VAc:CDC:V-70 = 100:1:0.4).
The resulting polymer solution was subjected to NMR measurement, and the reaction percentage of vinyl acetate was determined to be 86%. The unreacted vinyl acetate was removed under reduced pressure at 25°C from the polymer solution obtained by the reaction to give a RAFT polymer of polyvinyl acetate (PVE1).
The results of the analysis are shown in Table 1. The number average molecular weight Mn measured by GPC well corresponded to the theoretical number average molecular weight Mn.

Synthetic Example A2

RAFT polymerization was performed in the same manner as in Synthetic Example A1 except that the input mole ratio was changed to VAc:CDC:V-70 = 300:1:0.4. The analysis results of the resulting RAFT polymer of polyvinyl acetate are shown in Table 1. The number average molecular weight Mn measured by GPC well corresponded to the theoretical number average molecular weight Mn.

Synthetic Example A3

RAFT polymerization was performed in the same manner as in Synthetic Example A1 except that vinyl trifluoroacetate (VTFAc) was used as the vinyl ester. The analysis results of the resulting RAFT polymer of poly(vinyl trifluoroacetate) are shown in Table 1. The number average molecular weight Mn measured by GPC relatively well corresponded to the theoretical number average molecular weight Mn.

Synthetic Example A4

RAFT polymerization was performed in the same manner as in Synthetic Example A1 except that vinyl monochloroacetate (VClAc) was used in place of vinyl acetate. The number average molecular weight Mn measured by GPC was only about 70% of the theoretical number average molecular weight Mn, suggesting that the degree of polymerization was decreased due to chain transfer by the chloromethyl group of vinyl monochloroacetate. The molecular weight distribution $M_w/M_n$ was higher than that of the RAFT polymer of vinyl acetate. The resulting polymer developed a brown color.

Table 1

| | Polymerization conditions | | Results | | | | |
|---|---|---|---|---|---|---|---|
| | Vinyl ester (VE1) | Input mole ratio | Reaction percentage | Degree of polymerization | Mn | Mn | Mw/Mn |
| | Type | VE1:CDC:V-70 | % | (Theoretical) | (Theoretical) | (GPC) | (GPC) |
| Synthetic Example A1 | VAc | 100:1:0.4 | 86 | 86 | 7,700 | 7,800 | 1.22 |
| Synthetic Example A2 | VAc | 300:1:0.4 | 78 | 234 | 20,000 | 21,000 | 1.34 |
| Synthetic Example A3 | VTFAc | 100:1:0.4 | 85 | 85 | 12,000 | 11,000 | 1.50 |
| Synthetic Example A4 | VClAc | 100:1:0.4 | 85 | 85 | 11,000 | 7,500 | 2.14 |

Synthesis of PVE1-PVE2 block copolymer

Synthetic Example B1

To a reaction vessel were added 170 parts by mass of tetrahydrofuran (THF), 66 parts by mass of vinyl pivalate (VPi), and 100 parts by mass of the RAFT polymer of polyvinyl acetate (PVE1) obtained in Synthetic Example A1, and the mixture was degassed by introducing nitrogen into the reaction vessel for 15 minutes. The reaction vessel was placed in a hot water bath at 40°C, and 1.7 parts by mass of V-70 was added to react at 40°C for 24 hours (at an input mole ratio of VPi:PVE1 :V-70 = 20:1:0.4).

The resulting polymer solution was subjected to NMR measurement, and the reaction percentage of vinyl pivalate was determined to be 50%. To the resulting polymer solution obtained by the reaction, 1.7 parts by mass of 2,2,6,6-tetramethylpiperidine-1-oxyl (TEMPO) was added as a polymerization terminator, and THF and the unreacted vinyl pivalate were removed under reduced pressure at 120°C.

The analysis results of the resulting polyvinyl acetate-polyvinyl pivalate block copolymer (PVE1-PVE2) are shown in Table 2. In Table 2, the degree of polymerization (theoretical) indicates the degree of polymerization of the PVE2 component.

Synthetic Examples B2 to B9

Block copolymers (PVE1-PVE2) were synthesized in the same manner as in Synthetic Example B1 except that the RAFT polymer of the first vinyl ester (PVE1), the second vinyl ester (VE2), and the input mole ratio were changed as shown in Table 2. The analysis results are shown in Table 2. In Synthetic Example B4, vinyl versatate (trade name: VeoVa9) manufactured by HEXION was used in place of VPi.

The $M_w/M_n$ in Synthetic Example B9 was considerably higher than those in Synthetic Examples B1 to B8. This is probably because part of the polymer obtained in Synthetic Example A4 is terminated not with the block polymerizable RAFT agent but with chlorine.

Table 2

| | Polymerization conditions | | | Results | | | |
|---|---|---|---|---|---|---|---|
| | PVE1 | Vinyl ester (VE2) | Input mole ratio | Reaction percentage | Degree of polymerization | Mn | Mw/Mn |
| | Type | Type | VE2:PVE1:V-70 | % | (Theoretical) | (GPC) | (GPC) |
| Synthetic Example B1 | Synthetic Example A1 | VPi | 20:1:0.4 | 50 | 10 | 8,800 | 1.30 |
| Synthetic Example B2 | Synthetic Example A1 | VPi | 50:1:0.4 | 53 | 27 | 11,000 | 1.35 |
| Synthetic Example B3 | Synthetic Example A1 | VPi | 200:1:0.4 | 52 | 104 | 20,000 | 1.50 |
| Synthetic Example B4 | Synthetic Example A1 | VeoVa9 | 20:1:0.4 | 48 | 10 | 9,000 | 1.55 |
| Synthetic Example B5 | Synthetic Example A2 | VPi | 20:1:0.4 | 50 | 10 | 21,000 | 1.40 |
| Synthetic Example B6 | Synthetic Example A2 | VPi | 50:1:0.4 | 55 | 28 | 23,000 | 1.47 |
| Synthetic Example B7 | Synthetic Example A3 | VAc | 20:1:0.4 | 55 | 11 | 12,000 | 1.60 |
| Synthetic Example B8 | Synthetic Example A3 | VAc | 50:1:0.4 | 50 | 25 | 13,000 | 1.65 |
| Synthetic Example B9 | Synthetic Example A4 | VAc | 50:1:0.4 | 55 | 28 | 9,500 | 2.50 |

Synthesis of PVE1-PVE2-PVE1 triblock copolymer

Synthetic Examples B10 and B11

The diblock copolymer obtained in Synthetic Example B1 (PVE1-PVE2), vinyl acetate as a third vinyl ester (VE3), and an initiator (V-70) were reacted in the same manner as in Example B1 at the input mole ratio shown in Table 3 to synthesize an A-B-A type triblock copolymer of vinyl acetate-vinyl pivalate-vinyl acetate.

The results are shown in Table 3.

Table 3

| | Polymerization conditions | | | Results | | | |
|---|---|---|---|---|---|---|---|
| | PVE2 | Vinyl ester (VE3) | Input mole ratio | Reaction percentage | Degree of polymerization | Mn | Mw/Mn |
| | Type | Type | VE3:PVE2:V-70 | % | (Theoretical) | (GPC) | (GPC) |
| Synthetic Example B10 | Example B1 | VAc | 20:1:0.4 | 50 | 10 | 9,000 | 1.47 |
| Synthetic Example B11 | Example B1 | VAc | 100:1:0.4 | 53 | 53 | 12,000 | 1.55 |

Synthesis of partially saponified polyvinyl alcohol (PVA)

Example C1

To a reaction vessel were added 100 parts by mass of the block copolymer of polyvinyl acetate-polyvinyl pivalate (PVE1-*b*-PVE2) obtained in Synthetic Example B1 and 900 parts by mass of methanol. The reaction vessel was placed in a hot water bath at 50°C, and the block copolymer was dissolved by stirring.

After dissolving, 1 mol% of sodium hydroxide relative to the vinyl ester units was added as a 5% solution in methanol to perform saponification at 50°C for 1 hour. During the reaction, a solid precipitated from the solution. After the reaction, the residual sodium hydroxide was neutralized by the addition of acetic acid, and the solid was filtered off.

The solid was dried at 65°C for 24 hours to give a partially saponified polyvinyl alcohol of interest. The analysis by $^1$H-NMR revealed that the partially saponified polyvinyl alcohol is composed of vinyl alcohol units x = 84, vinyl acetate units y = 2, and vinyl pivalate units = 10. This and other analysis results are shown in Tables 4 and 5.

A completely saponified polyvinyl alcohol for GPC measurement was synthesized as follows. The partially saponified polyvinyl alcohol was dissolved or dispersed in methanol, and an aqueous sodium hydroxide solution was added. The mixture was reacted at 55°C for 1 hour or more, and the residual sodium hydroxide was neutralized by the addition of an aqueous acetic acid solution. The resulting completely saponified polyvinyl alcohol in a solid form was separated by filtration, washed by Soxhlet extraction (solvent: methanol), dried, and used as a measurement sample.

Examples C2 to C13

Partially saponified polyvinyl alcohols were synthesized in the same manner as in Example C1 except that the block copolymer used, the type of saponification catalyst used, and the amounts thereof were changed as shown in Table 4. The results of the analysis are shown in Table 5.

The partially saponified polyvinyl alcohol obtained in Example C12 had a higher YI value, a higher chlorine content, and a higher Mw/Mn when completely saponified as compared with the partially saponified polyvinyl alcohols obtained in Examples C1 to C11.

Comparative Example C1

A partially saponified polyvinyl alcohol (with a degree of saponification of 88 mol%) was synthesized under the conditions shown in Table 4 using polyvinyl acetate with a degree of polymerization of 300 in place of the block copolymer.

The results of the analysis are shown in Table 5. The partially saponified polyvinyl alcohol with a degree of polymerization of 300 (the partially saponified product of polyvinyl acetate with a degree saponification of 88 mol%) had a block character of 0.45 and a hydrodynamic radius of 6 nm in water. The partially saponified polyvinyl alcohol has a less blocky nature, and thus probably has a poor associate-forming capacity.

Table 4

| | PVE1-b-PVE2-b-PVE3 | | | | | | | | Saponification conditions | |
|---|---|---|---|---|---|---|---|---|---|---|
| | [Type] | Constituent units | | | Degree of polymerization | | | | [Saponification catalyst] | [mol%] |
| | | VE1 | VE2 | VE3 | PVE1 | PVE2 | PVE3 | Total | | |
| Example C1 | Synthetic Example B1 | VAc | VPi | - | 86 | 10 | | 96 | Sodium hydroxide | 1 |
| Example C2 | Synthetic Example B1 | VAc | VPi | - | 86 | 10 | | 96 | Sodium hydroxide | 10 |
| Example C3 | Synthetic Example B2 | VAc | VPi | - | 86 | 27 | | 113 | Sodium hydroxide | 1 |
| Example C4 | Synthetic Example B3 | VAc | VPi | - | 86 | 104 | | 190 | Sodium hydroxide | 1 |
| Example C5 | Synthetic Example B4 | VAc | VeoVa | - | 86 | 10 | | 96 | Sodium hydroxide | 1 |
| Example C6 | Synthetic Example B5 | VAc | VPi | - | 234 | 10 | | 244 | Sodium hydroxide | 1 |
| Example C7 | Synthetic Example B6 | VAc | VPi | - | 234 | 28 | | 262 | Sodium hydroxide | 1 |
| Example C8 | Synthetic Example B7 | VTFAc | VAc | - | 85 | 11 | | 96 | Potassium carbonate | 1 |
| Example C9 | Synthetic Example B8 | VTFAc | VAc | - | 85 | 25 | | 110 | Potassium carbonate | 1 |
| Example C10 | Synthetic Example B10 | VAc | VPi | VAc | 86 | 10 | 10 | 106 | Sodium hydroxide | 1 |
| Example C11 | Synthetic Example B11 | VAc | VPi | VAc | 86 | 10 | 53 | 149 | Sodium hydroxide | 1 |
| Example C12 | Synthetic Example 89 | VCIAc | VAc | - | 85 | 28 | | 113 | Potassium carbonate | 1 |
| Example C13 | Synthetic Example B1 | VAc | VPi | - | 86 | 10 | | 96 | Sodium hydroxide | 0.3 |
| Comparative Example C1 | Polyvinyl alcohol with degree of polymerization of 300/ degree of saponification of 88 mol% | | | | | | | 300 | Sodium hydroxide | 1 |

Table 5

| | Composition of partially saponified polyvinyl alcohol ($^{1}$H-NMR measurement) | | | | | | | $^{13}$C-NMR measure ment | 1% solution in DMSO | combustion IC measurement | DLS measurement | GPC measurement (completely saponified PVA) | |
|---|---|---|---|---|---|---|---|---|---|---|---|---|---|
| | Vinyl alcohol | Vinyl ester 1 | | Vinyl ester 2 | | Degree of polymerization | x/(x +y+z) | Block character | **YI** value | Chlorine content | Hydrodynamic radius | Mn | Mw/Mn |
| | x | [$R_1$] | y | [$R_2$] | z | x+y+z | % (x 100) | $\eta$ | | [ppm] | [nm] | (GPC) | (GPC) |
| Example C1 | 84 | $CH_3$ | 2 | *tert-Bu* | 10 | 96 | 88 | 0.20 | 12 | 10 | 15 | 4,200 | 1.4 |
| Example C2 | 89 | $CH_3$ | 0.2 | *tert-Bu* | 7 | 96 | 93 | 0.18 | 18 | 20 | 12 | 4,200 | 1.4 |
| Example C3 | 88 | $CH_3$ | 2 | *tert-Bu* | 23 | 113 | 78 | 0.16 | 10 | 10 | 25 | 5,000 | 1.5 |
| Example C4 | 93 | $CH_3$ | 2 | *tert-Bu* | 95 | 190 | 49 | 0.15 | 8 | 10 | - | 8,000 | 1.6 |
| Example C5 | 85 | $CH_3$ | 2 | Derived from ver-satate | 9 | 96 | 89 | 0.25 | 16 | 30 | 33 | 4,000 | 1.5 |
| Example C6 | 230 | $CH_3$ | 5 | *tert-Bu* | 9 | 244 | 94 | 0.15 | 12 | 10 | 40 | 10,000 | 1.5 |
| Example C7 | 229 | $CH_3$ | 5 | *tert-Bu* | 28 | 262 | 87 | 0.12 | 7 | 10 | 55 | 11,000 | 1.6 |
| Example C8 | 86 | $CF_3$ | 0.5 | $CH_3$ | 10 | 97 | 89 | 0.18 | 25 | 30 | 17 | 3,800 | 1.5 |
| Example C9 | 86 | $CF_3$ | 0.5 | $CH_3$ | 24 | 111 | 78 | 0.15 | 20 | 30 | 20 | 4,200 | 1.6 |
| Example C10 | 94 | $CH_3$ | 2 | *tert-Bu* | 10 | 106 | 89 | 0.25 | 23 | 20 | 20 | 4,500 | 1.6 |
| Example C11 | 137 | $CH_3$ | 2 | *tert-Bu* | 10 | 149 | 92 | 0.22 | 20 | 20 | 35 | 6,400 | 1.7 |
| Example C12 | 85 | $CH_2Cl$ | 3 | $CH_3$ | 25 | 113 | 75 | 0.15 | 65 | 8000 | 30 | 3,900 | 2.8 |
| Example C13 | 53 | $CH_3$ | 33 | *tert-Bu* | 10 | 96 | 55 | 0.37 | 11 | 10 | - | 4,200 | 1.4 |
| Comparative Example C1 | 264 | $CH_3$ | 36 | - | - | 300 | 88 | 0.45 | 1 | 10 | 6 | 13,000 | 2.4 |

Investigation of solubility of hydrophobic substances (such as anthracene)

The partially saponified polyvinyl alcohols obtained in the Examples may easily form excellent associates (micelles) with a core composed of the hydrophobic segment (the vinyl ester unit-rich segment) and a shell composed of the hydrophilic segment (the vinyl alcohol unit-rich segment) in water.

In this investigation, we examined whether the partially saponified polyvinyl alcohols can encapsulate a hydrophobic substance within the hydrophobic core in water, and whether such encapsulation is applicable to a drug delivery system etc.

Anthracene is used as a hydrophobic substance in this investigation. The solubility of anthracene dissolved in water is estimated by the UV absorbance. It should be noted that the solubility of anthracene in 100 mL (100 g) of water at (20°C) is about 0.13 mg (0.13 mg/100 g water). The specific procedure will be described below.

Example D1

First, 50 mg of the partially saponified polyvinyl alcohol obtained in Example C1 and 5 mg of anthracene were dissolved in 950 mg of 1,1,1,3,3,3-hexafluoro-2-propanol (HFIP). The solution was saturated with anthracene, and undissolved anthracene remained. The solution was dialyzed against water for 24 hours using a dialysis cellulose tube (dialysis membrane manufactured by Sekisui Material Solutions Co., Ltd., 36/32, 5 nm pore size) to prepare an anthracene-saturated aqueous solution.

The undissolved anthracene was filtered off with a membrane filter with a pore size of 0.45 μm. This sample solution was diluted in water so that the concentration of the partially saponified polyvinyl alcohol was 0.5% by mass.

The UV-Vis spectrum of the solution (in a quartz cell with a 10 mm optical path length) was measured at 20°C using an ultraviolet-visible spectrometer (manufactured by JASCO Corporation; V-730).

Similarly, a 0.5% by mass aqueous solution of the partially saponified polyvinyl alcohol as a blank was also subjected to the measurement of the UV-Vis spectrum. The absorbance of anthracene dissolved in the aqueous solution of the partially saponified polyvinyl alcohol was determined by deducting the absorbance of the blank at 254 nm from the absorbance of the sample solution at 254 nm.

Example D2

The absorbance of anthracene dissolved in an aqueous solution of a partially saponified polyvinyl alcohol was determined in the same manner as in Example D1 except that the partially saponified polyvinyl alcohol used was changed to the partially saponified polyvinyl alcohol obtained in Example C12.

Comparative Example D1

The absorbance of anthracene dissolved in an aqueous solution of a partially saponified polyvinyl acetate with a degree of polymerization of 300 was determined in the same manner as in Example D1 except that the partially saponified polyvinyl alcohol used was changed to the partially saponified polyvinyl acetate with a degree of polymerization of 300 (with a degree of saponification of 88 mol% and a block character of 0.45) obtained in Comparative Example C1.

Comparative Example D2

The absorbance of anthracene dissolved in water was determined in the same manner as in Example D1 except that no partially saponified polyvinyl alcohol was added. Pure water was used as a blank.

The results are shown in the table below.

Table 6

| | Partially saponified polyvinyl alcohol | Absorbance |
|---|---|---|
| Example D1 | Example C1 | 1.18 |
| Example D2 | Example C12 | 0.12 |
| Comparative Example D1 | Comparative Example C1 | 0.014 |
| Comparative Example D2 | N/A | 0.003 |

Examples D1 and D2 showed a higher absorbance of anthracene than that in Comparative Example D1. In

particular, the absorbance in Example D1 was as high as a 80-fold or higher than that in Comparative Example D1. The results demonstrate that the partially saponified polyvinyl alcohols obtained in Examples C1 and C12 (in particular, Example C1) greatly enhance the solubility of anthracene by encapsulating it in the hydrophobic core of micelles.

Examples E1 and E2 and Comparative Examples E1 and E2

The absorbance of a hydrophobic substance was determined in the same manner as in Examples D1 and D2 and Comparative Examples D1 and D2 except that ethenzamide [a substance that has a solubility of about 100 mg in 100 mL (100 g) of water at 20°C (100 mg/100 g water)] was used in place of anthracene, and that the concentration of the partially saponified polyvinyl alcohol was changed from 0.5% by mass to 0.2% by mass. The results showed a similar tendency as in Examples D1 and D2 and Comparative Examples D1 and D2.

INDUSTRIAL APPLICABILITY

The present invention provides a specific polyvinyl alcohol-based polymer. The polymer can be used for various applications, such as medical materials for, for example, drug delivery systems, etc.

## Claims

1. A polyvinyl alcohol-based polymer having a block character of 0.4 or less.

2. A polyvinyl alcohol-based polymer having a hydrodynamic radius of 8 nm or more in water at 25°C.

3. A polyvinyl alcohol-based polymer having a block character of 0.4 or less and a hydrodynamic radius of 8 nm or more in water at 25°C.

4. The polyvinyl alcohol-based polymer according to any one of claims 1 to 3, wherein the block character is 0.37 or less.

5. The polyvinyl alcohol-based polymer according to any one of claims 1 to 3, wherein the polyvinyl alcohol-based polymer comprises vinyl ester units comprising two or more types of vinyl ester units.

6. The polyvinyl alcohol-based polymer according to any one of claims 1 to 3, wherein the vinyl ester units comprise a vinyl acetate unit and a vinyl ester unit other than the vinyl acetate unit.

7. The polyvinyl alcohol-based polymer according to any one of claims 1 to 3, wherein the vinyl ester units comprise a vinyl acetate unit and a vinyl ester unit not containing chlorine.

8. The polyvinyl alcohol-based polymer according to any one of claims 1 to 3, wherein the vinyl ester units comprise a vinyl acetate unit and a vinyl pivalate unit.

9. The polyvinyl alcohol-based polymer according to any one of claims 1 to 3, wherein a 1% by mass solution of the polyvinyl alcohol-based polymer in DMSO has a YI of 40 or less.

10. The polyvinyl alcohol-based polymer according to any one of claims 1 to 3, wherein when the polyvinyl alcohol-based polymer is completely saponified, the polyvinyl alcohol-based polymer has a molecular weight distribution (Mw/Mn) of 2.2 or less.

11. The polyvinyl alcohol-based polymer according to any one of claims 1 to 3, wherein the polyvinyl alcohol-based polymer has a chlorine content of 1000 ppm or less.

12. The polyvinyl alcohol-based polymer according to any one of claims 1 to 3, wherein the polyvinyl alcohol-based polymer has a degree of saponification of 40 to 96 mol%.

13. The polyvinyl alcohol-based polymer according to any one of claims 1 to 3, wherein the polyvinyl alcohol-based polymer is a product of saponification of a block copolymer containing two or more types of vinyl esters as polymerization components.

**14.** The polyvinyl alcohol-based polymer according to any one of claims 1 to 3, wherein the polyvinyl alcohol-based polymer has a degree of polymerization of 50 or more.

**15.** The polyvinyl alcohol-based polymer according to any one of claims 1 to 3, wherein the polyvinyl alcohol-based polymer has a degree of polymerization of 50 to 1000 and a degree of saponification of 40 to 96 mol%.

**16.** A polyvinyl alcohol-based polymer having

a block character of 0.37 or less,
a hydrodynamic radius of 10 nm or more in water at 25°C,
a degree of polymerization of 50 to 1000, and
a degree of saponification of 40 to 96 mol%, and

satisfying at least one selected from the following (1), (2) and (3):

(1) the polyvinyl alcohol-based polymer, when completely saponified, has a molecular weight distribution (Mw/Mn) of 2 or less,
(2) a 1% by mass solution of the polyvinyl alcohol-based polymer in DMSO has a YI of 30 or less, and
(3) the polyvinyl alcohol-based polymer has a chlorine content of 100 ppm or less.

**17.** An aqueous liquid comprising the polyvinyl alcohol-based polymer according to any one of claims 1 to 3 and 16.

**18.** The aqueous liquid according to claim 17, wherein the polyvinyl alcohol-based polymer has a hydrodynamic radius of 10 nm or more.

**19.** A method for producing the polyvinyl alcohol-based polymer according to any one of claims 1 to 3 and 16, comprising at least the following steps 1, 2 and 3:

step 1) subjecting a first vinyl ester to living radical polymerization to synthesize a macro-chain transfer agent,
step 2) subjecting a second vinyl ester different from the first vinyl ester to living radical polymerization in the presence of the macro-chain transfer agent obtained in step 1 to synthesize a block copolymer, and
step 3) partially saponifying the block copolymer obtained by at least step 2.

**20.** The method according to claim 19, wherein the living radical polymerization is reversible addition-fragmentation chain-transfer polymerization.

**21.** A micelle comprising the polyvinyl alcohol-based polymer according to any one of claims 1 to 3 and 16 and a cargo.

**22.** The micelle according to claim 21, wherein the cargo contains a substance having a solubility of 500 mg or less in 100 mL of water at 20°C.

**23.** An aqueous liquid comprising the micelle according to claim 21 or 22.

## INTERNATIONAL SEARCH REPORT

International application No.
**PCT/JP2024/002749**

**A. CLASSIFICATION OF SUBJECT MATTER**

***C08F 293/00***(2006.01)i; ***C08F 8/12***(2006.01)i; ***C08F 16/06***(2006.01)i; ***C08L 29/04***(2006.01)i; ***C08L 53/00***(2006.01)i
FI: C08F293/00; C08F8/12; C08F16/06; C08L53/00; C08L29/04 G

According to International Patent Classification (IPC) or to both national classification and IPC

**B. FIELDS SEARCHED**

Minimum documentation searched (classification system followed by classification symbols)

C08F293/00; C08F8/12; C08F16/06; C08F18/02-18/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/145393 A1 (MITSUBISHI CHEMICAL CORPORATION) 22 July 2021 (2021-07-22)<br>claims, paragraphs [0026]-[0028], [0049], examples 1, 2 | 1, 4-12, 14-15, 17, 21-23 |
| A | | 2-3, 13, 16, 18-20 |
| X | US 2015/0307645 A1 (WISCONSIN ALUMNI RESEARCH FOUNDATION) 29 October 2015 (2015-10-29)<br>claims, paragraphs [0023], [0024], [0039], examples 1-15, fig. 6, 8 | 1-7, 9-23 |
| A | | 8 |
| X | WO 2021/206128 A1 (DENKA CO., LTD.) 14 October 2021 (2021-10-14)<br>claims, examples 3, 6, comparative example 2 | 2, 9-12, 14-15, 17-18, 21-23 |
| A | | 1, 3-8, 13, 16, 19-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 March 2024** | **02 April 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/002749**

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2007-246639 A (KURARAY CO., LTD.) 27 September 2007 (2007-09-27)<br>claims, paragraphs [0010], [0023], [0024], examples 1-3 | 1, 4-15, 17, 19-23<br>2-3, 16, 18 |
| X<br>A | JP 2000-105461 A (FUJI PHOTO FILM CO., LTD.) 11 April 2000 (2000-04-11)<br>claims, examples 1-3 | 1, 4, 9-12, 14-15, 17, 21-23<br>2-3, 5-8, 13, 16, 18-20 |
| X<br>A | JP 2000-178316 A (THE NIPPON SYNTHETIC CHEMICAL INDUSTRY CO., LTD.) 27 June 2000 (2000-06-27)<br>claims, examples 4, 7, 8 | 1, 4-7, 9-12, 14-15, 17, 21-23<br>2-3, 8, 13, 16, 18-20 |
| X<br>A | JP 4-117408 A (KURARAY CO., LTD.) 17 April 1992 (1992-04-17)<br>claims, p. 2, lower right column, lines 10-14, examples 1-3 | 1, 4, 9-12, 14-15, 17, 21-23<br>2-3, 5-8, 13, 16, 18-20 |
| A | JP 2005-23297 A (MITSUBISHI CHEMICAL CORPORATION) 27 January 2005 (2005-01-27) | 1-23 |
| A | JP 6-136036 A (KURARAY CO., LTD.) 17 May 1994 (1994-05-17) | 1-23 |
| A | US 2008/0027175 A1 (CELANESE VENTURES GMBH) 31 January 2008 (2008-01-31) | 1-23 |

Form PCT/ISA/210 (second sheet) (July 2022)

**INTERNATIONAL SEARCH REPORT**
**Information on patent family members**

International application No.
**PCT/JP2024/002749**

| Patent document cited in search report | Publication date (day/month/year) | Patent family member(s) | Publication date (day/month/year) |
|---|---|---|---|
| WO 2021/145393 A1 | 22 July 2021 | US 2022/0340697 A1<br>claims, paragraphs [0033]-[0041], [0070], examples 1, 2<br>EP 4091704 A1<br>CN 114981319 A<br>TW 202136328 A | |
| US 2015/0307645 A1 | 29 October 2015 | WO 2011/115641 A1 | |
| WO 2021/206128 A1 | 14 October 2021 | US 2023/0174683 A1<br>claims, examples 3, 6, comparative example 2<br>EP 4105243 A1<br>CN 115298228 A | |
| JP 2007-246639 A | 27 September 2007 | (Family: none) | |
| JP 2000-105461 A | 11 April 2000 | (Family: none) | |
| JP 2000-178316 A | 27 June 2000 | (Family: none) | |
| JP 4-117408 A | 17 April 1992 | (Family: none) | |
| JP 2005-23297 A | 27 January 2005 | JP 2010-209336 A<br>US 2006/0089423 A1<br>WO 2004/090006 A1<br>EP 1609807 A1<br>CN 1768085 A | |
| JP 6-136036 A | 17 May 1994 | (Family: none) | |
| US 2008/0027175 A1 | 31 January 2008 | WO 2005/054310 A2<br>DE 10356574 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019159757 A